# EUROPÄISCHE PATENTANMELDUNG

(11) **EP 4 728 857 A1**
(43) Veröffentlichungstag der Anmeldung: **22.04.2026**
(21) Anmeldenummer: 25209632.6
(22) Anmeldetag: 18.10.2025
(51) Int. Cl.: A01K 5/02

(54) **VORRICHTUNG ZUR KONTROLLIERTEN ABGABE VON FUTTERMATERIAL UND VERFAHREN ZUR FERNBEDIENTEN UND/ODER AUTOMATISCHEN AUSGABE VON FUTTERMATERIAL AUS EINER SOLCHEN VORRICHTUNG**

(30) Priorität: 18.10.2024 DE 202024105983 U
(71) Anmelder: Attratec GmbH, 63820 Elsenfeld (DE)
(72) Erfinder: Schnabel, Gerhard, 63820 Elsenfeld (DE)
(74) Vertreter: Baumann, Rüdiger Walter

(57) **Zusammenfassung**

Die Erfindung betrifft eine Vorrichtung (I) zur automatischen und/oder fernbedient durch einen Nutzer steuerbaren Abgabe von Futtermaterial, insbesondere Wildfutter oder Kirrgut, umfassend: wenigstens ein Reservoir (II) für das Futtermaterial und eine dem Reservoir (II) zugeordnete Ausgabeeinheit (V) für das Futtermaterial; wenigstens einen mit der Vorrichtung (I) und/oder der Ausgabeeinheit (V) verbundenen oder in räumlicher Nähe zu der Vorrichtung (I) und/oder der Ausgabeeinheit (V) jedoch von dieser/diesen losgelöst angeordneten Sensor (VII); eine Sendeeinheit für die Absendung wenigstens eines von dem Sensor (VII) erfassten Sensorsignals an den Nutzer und/oder eine Auswerteeinheit; eine Empfängereinheit für den Empfang wenigstens eines von dem Nutzer und/oder der Auswerteeinheit aus dem empfangenen Sensorsignal abgeleiteten Steuerbefehls, und eine mit der Empfängereinheit gekoppelte Steuereinheit, die dazu ausgebildet ist, nach Empfang des Steuerbefehls eine Ausgabe von Futtermaterial aus dem Reservoir (II) in die Ausgabeeinheit (V) zu steuern und ein Verfahren zur fernbedienten und/oder automatischen Ausgabe von Futtermaterial aus einer solchen Vorrichtung (I).

## Beschreibung

Die vorliegende Erfindung fällt in das Gebiet der Tierfütterung, insbesondere Geräte bzw. Dispenser für Tierfütterungen, besonders für die Fütterung von Wildtieren, wie z.B. Wildschweinen.

Programmierbare Kirr- und Fütterungsgeräte, sind dem Fachmann bekannt. Im Sinne dieser Erfindung sind die Begriffe Kirrgerät, Fütterungsgerät, Wildfutterautomat, Kirrautomat, Futterautomat alternativ verwendete bzw. verwendbare Bezeichnungen.

Als Kirrung oder Kirrplatz bezeichnet der Jäger einen Platz zum Ausbringen von Getreide, wie z. B. Mais, oder anderen nichtfleischlichen Stoffen, die von Wild als Nahrung gesucht werden. Es ist eine "Lockfütterung". Der Vorgang der Ausbringung wird als "kirren" oder "ankirren" bezeichnet. Ziel der Anlage einer Kirrung ist es, das Wild an einen bestimmten Platz zu locken und dort ausreichend lange zu beschäftigen, um es bejagen und/oder beobachten zu können.

In Notzeiten, d.h. in Zeiten ohne ausreichendes natürliches Futterangebot, kann im Unterschied zur Kirrung eine Wildfütterung durchgeführt werden, um v.a. dem Wild ausreichend Nahrung zur Verfügung zu stellen, um Notzeiten zu überwinden. Die vorliegende Erfindung bezieht sich vor allem auf Kirrungen, ist hierauf nicht beschränkt und kann selbstverständlich auch zur Wildfütterung eingesetzt werden.

Teilweise ist es aus hygienischen oder Tierschutzgründen erwünscht, Lockfutter (im Zusammenhang mit der vorliegenden Erfindung auch synonym als Kirrgut, Kirrfutter, Lockfutter, Lockfuttermittel oder Kirrmaterial bezeichnet) bzw. Futter für Wild, insbesondere Schalenwild, bevorzugt Schwarzwild (Wildschweine) so auszubringen, dass es nur von einer Wildart, insbesondere von Schalenwild, bevorzugt Schwarzwild (Wildschweine) aufgenommen werden kann. Zudem ist es erwünscht, dass die täglich ausgebrachte Menge an Kirr- bzw. Lockfutter mengenmäßig begrenzt wird, und in manchen Fällen wird es auch als wünschenswert angesehen, dass nur dann neues Futter ausgebracht wird, wenn bereits alles angebotene Lockfutter aufgenommen worden ist.

Auf dem Markt erhältliche Geräte bzw. Futterdispenser zur Ausgabe von Lockfutter (Kirrgut oder Kirrfutter) erfüllen diese Anforderungen oftmals nicht, insbesondere in Bezug auf die Regelungen zu ausgebrachter Futtermenge, Ausbringungszeitraum und Ausbringungsintervallen.

Daher ist es in vielen Fällen nötig, regelmäßig - im Idealfall täglich - Kirrplätze (Lockfutterplätze, Kirrung) zu kontrollieren und ggf. Lockfutter manuell nachzufüllen, und zwar so, dass das Lockfutter nur für Wild, insbesondere Schalenwild, bevorzugt Wildschweine erreichbar ist, z.B. in Kirrkästen. Der zeitliche und auch finanzielle Aufwand (Spritkosten) wird dadurch für Jäger sehr hoch. Zudem führt ein täglicher Besuch einer Kirrung auch immer zu einer gewissen Beunruhigung, was die Chancen auf Jagderfolg reduziert.

Aufgabe dieser Erfindung ist es, eine Möglichkeit zur Ausgabe von Futtermaterial bereit zu stellen, um eine Fütterung von Wild, insbesondere Schalenwild, bevorzugt Schwarzwild (Wildschweine) mit definierter Futtermenge (fern)kontrolliert bzw. (fern)gesteuert durchzuführen, wobei die Futtermenge auf eine Maximalmenge pro Tag begrenzbar und das Futter nicht frei bzw. nur für eine Wildart, insbesondere Schalenwild, bevorzugt Schwarzwild, zugänglich ist.

Gelöst wird diese Aufgaben durch eine Vorrichtung zur automatischen und/oder durch einen Nutzer fernbedient steuerbaren Abgabe von Futtermaterial, insbesondere Wildfutter oder Kirrgut, nach Anspruch 1 und ein Verfahren zur fernbedienten und/oder automatischen Ausgabe von Futtermaterial nach Anspruch 15.

Bevorzugte Weiterbildungen der Erfindung sind Gegenstand der abhängigen Ansprüche.

Die Erfindung stellt eine Vorrichtung zur automatischen und/oder durch einen Nutzer fernbedient steuerbaren Abgabe von Futtermaterial, insbesondere Wildfutter oder Kirrgut, zur Verfügung, die wenigstens ein Reservoir für das Futtermaterial und eine dem Reservoir zugeordnete Ausgabeeinheit für das Futtermaterial; wenigstens einen mit der Vorrichtung und/oder der Ausgabeeinheit verbundenen oder in räumlicher Nähe zu der Vorrichtung und/oder der Ausgabeeinheit jedoch von dieser/diesen losgelöst angeordneten Sensor; eine Sendeeinheit für die Absendung wenigstens eines von dem Sensor erfassten Sensorsignals an den Nutzer und/oder eine Auswerteeinheit; eine Empfängereinheit für den Empfang wenigstens eines von dem Nutzer und/oder der Auswerteeinheit aus dem empfangenen Sensorsignal abgeleiteten Steuerbefehls, und eine mit der Empfängereinheit gekoppelte Steuereinheit, die dazu ausgebildet ist, nach Empfang des Steuerbefehls eine Ausgabe von Futtermaterial in die Ausgabeeinheit zu steuern, umfasst.

Ein Vorteil der erfindungsgemäßen Vorrichtung besteht darin, dass eine kontrollierte Abgabe von Futtermaterial aus der Ausgabeeinheit ermöglicht wird, die fernbedienbar oder automatisiert ausgebildet ist und nur bei Abgabe eines Triggersignals Futtermaterial, insbesondere Kirrgut, aus einem Reservoir in eine geschlossene Ausgabeeinheit einfüllt. Aus dieser Ausgabeeinheit kann die Zieltierart, insbesondere Schwarzwild, das bereitgestellte Futter gezielt entnehmen. Auf diese Weise wird vermieden, dass Futtermaterial offen in der Umgebung liegt oder für andere als die gewünschte Wildart zugänglich ist. Damit werden tierschutzrechtliche und hygienische Bedenken ausgeräumt und nationale oder regionale gesetzliche Regelungen zur Abgabe von Futtermaterial an Wildtiere eingehalten. Zugleich werden die eingangs genannten Nachteile für den Jäger überwunden, da die Vorrichtung eine artselektive, kontrollierte und weitgehend störungsfreie Fütterung ermöglicht.

Der übliche Ablauf an einem Fütterungsplatz mit der erfindungsgemäßen Vorrichtung erfolgt idealerweise wie folgt:
- In der Ausgabeeinheit wird Futtermaterial für die Zieltierart, insbesondere beispielsweise für Schwarzwild, bereitgestellt.
- Nach einer gewissen Zeit erscheint die Zieltierart, beispielsweise insbesondere Schwarzwild, am Fütterungsplatz und entnimmt das Futtermaterial aktiv aus der Ausgabeeinheit.
- Mehr oder weniger zeitgleich wird der Jäger und/oder ein zentrales Auswerte- oder Kommunikationssystem informiert, dass die Zieltierart, beispielsweise insbesondere Schwarzwild, am Fütterungsplatz detektiert wurde. Diese Information kann automatisch durch Sensorik oder Bilderkennung generiert und über eine Kommunikationsschnittstelle, etwa per App, Push-Nachricht oder Mobilfunk, übermittelt werden.
- Die Zieltierart, beispielsweise insbesondere Schwarzwild, frisst das bereitgestellte Futtermaterial und zieht nach einer gewissen Verweildauer, beispielsweise nach etwa 30 bis 60 Minuten, wieder ab.
- Nach dem Verschwinden der Zieltierart, beispielsweise insbesondere Schwarzwild, wird erneut eine bestimmte Menge Futtermaterial in die Ausgabeeinheit eingebracht, um die Vorrichtung für den nächsten Besuch vorzubereiten. Dieser Vorgang kann in gleicher Weise wiederholt werden, bis das für den jeweiligen Tag definierte Futterlimit erreicht ist.

Durch diesen Ablauf wird erreicht, dass Futter- bzw. Lockmaterial nur dann zur Verfügung steht, wenn tatsächlich die Zieltierart, beispielsweise insbesondere Schwarzwild, anwesend ist, und dass die Futtermenge kontrolliert, reproduzierbar und dokumentierbar abgegeben wird.

Aus dem Stand der Technik ist bekannt, dass Fütterungsvorrichtungen für Wild bei Erkennung eines Tieres automatisch Futtermaterial ausgeben. In der Praxis zeigt sich jedoch, dass vorsichtige Tiere, insbesondere die Zieltierart Schwarzwild, auf das Geräusch oder die plötzliche Bewegung solcher Vorrichtungen empfindlich reagieren und sich dadurch häufig erschrecken oder dauerhaft die Vorrichtungen meiden. Zudem muss die Zieltierart bei den bekannten Systemen nicht aktiv werden, um Futter zu entnehmen, da das Material offen auf dem Boden oder in einer offenen Auffangfläche ausgebracht wird.

Dies kann zu verschiedenen Nachteilen führen: So kommt es vor, dass die Zieltierart, insbesondere Schwarzwild, zwar am Fütterungsplatz vorbeizieht, das angebotene Futter jedoch nicht annimmt, weil sie beispielsweise bereits gesättigt ist, sich auf dem Rückweg in die Einstände befindet oder lediglich eine nahegelegene Suhle oder Salzlecke aufsuchen will. In solchen Fällen bleibt das ausgegebene Futter ungenutzt liegen und wird für Nichtzielarten zugänglich. Dadurch entstehen hygienische Probleme, eine unkontrollierte Futterverteilung und eine mögliche Beunruhigung des Wildes durch vermehrte Aktivität anderer Tierarten.

Demgegenüber wird mit der erfindungsgemäßen Vorrichtung vorteilhaft erreicht, dass die Zieltierart, insbesondere Schwarzwild, aktiv in den Fütterungsvorgang eingebunden wird, da die Zieltierart, insbesondere Schwarzwild selbst eine Bewegung, etwa durch Betätigung einer Stange oder durch aktives Fressen in der Ausgabeeinheit, ausführt, um das bereitgestellte Futter zu entnehmen. Die Futterfreigabe erfolgt dabei kontrolliert, zeitlich begrenzt und abhängig von einem zuvor erzeugten Triggersignal, beispielsweise durch Sensorik, Bilderkennung oder eine Fernfreigabe.

Diese Kombination aus selektiver Freigabe, aktivem Futterzugang durch die Zieltierart und automatischer Nachdosierung ermöglicht ein tierschutzgerechtes, ökonomisches und rechtssicheres Fütterungssystem, das eine effiziente Unterstützung des jagdlichen Betriebs bei gleichzeitig minimaler Beunruhigung des Wildes gewährleistet. Die vorliegende Erfindung stellt eine Vorrichtung zur Ausgabe von Futtermaterial, insbesondere einen Futterdispenser bzw. eine Kirrstation für Tiere, insbesondere Wildtiere, bevorzugt Schwarzwild zur Verfügung, über den/die zum einen die tägliche Futtermittelausgabe mengenmäßig begrenzbar ist und bei der zudem das Futtermittel nicht frei verfügbar bereitgestellt wird. Die täglich aus dem Reservoir abgegebene Futtermenge ist fernbedient bzw. automatisiert steuer- bzw. kontrollierbar und wird nicht unspezifisch beispielsweise lediglich zeit- oder mengengesteuert durchgeführt. Die Vorrichtung kann bzgl. der Ausgabe des Futtermaterials nach oder bei Fernsteuerung vollautomatisiert betrieben werden, und zwar so, dass so lange Futter erneut bereitgestellt wird, bis das Tageslimit erreicht ist. Die Steuerbarkeit der Futtermaterialausgabe unmittelbar über den Nutzer oder eine zusätzliche Auswerteeinheit kann einen autonomen oder teilautonomen Betrieb der Vorrichtung ermöglichen. Die Auswerteeinheit muss nicht zwingend an oder in der Vorrichtung vorgesehen oder angeordnet sein. Eine Implementierung der Auswerteeinheit auf einem Rechner, einem Server oder in einer Cloud ist ebenfalls denkbar und von der Erfindung umfasst.

Die erfindungsgemäße Vorrichtung zur kontrollierten Abgabe von Futtermaterial, insbesondere Wildfutter oder Kirrgut, umfasst dabei wenigstens ein Reservoir für das Futtermaterial, eine Dosiereinheit und eine dem wenigstens einen Reservoir zugeordnete Ausgabeeinheit. Es ist zudem eine Steuereinheit und eine Empfängereinheit für Steuerbefehle vorgesehen. Letzteres insbesondere deshalb, um eine fernbedienbare und/oder über entsprechende Steuerbefehle automatisierbare Betätigung der Vorrichtung insbesondere zur Abgabe von Futtermaterial in eine Ausgabeeinheit zu ermöglichen. Die Vorrichtung erlaubt dabei eine automatische oder automatisierte Abgabe von Futtermaterial über in der Steuereinheit hinterlegte zeitintervall- und/oder höchstmengenabhängige Ausgabeanweisungen nach fernbedienter und/oder über entsprechende Steuerbefehle automatisierbarer Auslösung über durch von einem Nutzer und/oder von der der Auswerteeinheit empfangene Steuerbefehle. Die zugeteilte, bevorzugt mengenmäßig angepasste Futtermaterialmenge kann dann aus der Ausgabeeinheit durch die Zieltierart entnommen werden, wobei das Vorlegen des Futtermaterials und die Entnahme durch die Zieltierart zeitlich entkoppelt werden können.

Der wenigstens einen mit der Vorrichtung und/oder der Ausgabeeinheit verbundene oder in räumlicher Nähe zu der Vorrichtung und/oder der Ausgabeeinheit jedoch von dieser/diesen losgelöst angeordneten Sensor dient zur Erfassung von Wildbewegung und/oder von Bildern bzw. Videosequenzen bei Anwesenheit von Wild in der Nähe der Vorrichtung. Die Erfassung von Wildbewegung bzw. Bildern oder Videosequenzen dient als Triggersignal für die Initialisierung der Steuerung und/oder die Absendung des erfassten Sensorsignals an den Nutzer und/oder die Auswerteeinheit über die Sendeeinheit. Dies hat den Vorteil, dass bei Erfassung eines Sensorsignals die Vorrichtung in die Lage versetzt wird, Futtermaterial auszugeben, die tatsächliche Ausgabe allerdings erst nach Freigabe bzw. Auslösung der Ausgabe durch den Nutzer und/oder die Auswerteeinheit erfolgt und so eine rein sensorgesteuerte, unspezifische Ausgabe von Futtermaterial unterbunden wird. Es wird so eine Abgabe von Futtermaterial an die Zieltierart in einer vorgegebenen Menge und in einem definierbaren Zeitintervall möglich. Die Verwendung der Vorrichtung liegt dabei hauptsächlich in der Hand des Nutzers und/oder der Auswerteeinheit, der und/oder die diese fernbedient steuert bzw. kontrolliert.

Als vorteilhaft erweist es sich bei der Verwendung der erfindungsgemäßen Vorrichtung, dass sich für den Jäger/Nutzer Zeit- und Fahrtkosteneinsparungen sowie Einsparungen an Kirrgut durch optimalen Futtereinsatz ergeben. Auch kann eine tägliche Beunruhigung durch Kontrollbesuche des Jägers/Nutzers an den Kirrplätzen unterbleiben, was zu einer Steigerung des Anblicks und der Jagdchancen an solchen Kirrplätzen führt. Neben dem Einsatz an einer Kirrung kann die erfindungsgemäße Vorrichtung aber z.B. auch für die Verwendung an Ablenkfütterungen oder Notzeitfütterungen genutzt werden.

In einer weiteren bevorzugten Ausführungsform ist vorgesehen, dass die Vorrichtung eine GPS-Funktion und/oder eine Trackingeinrichtung aufweist. Diese kann zur Positionsbestimmung und zur Überwachung des Gerätestandorts dienen und trägt insbesondere zum Diebstahlschutz und zur erleichterten Wiederauffindbarkeit der Vorrichtung bei.

Die technische Realisierung der GPS- bzw. Trackingfunktion kann auf unterschiedliche Weise erfolgen. So kann die Vorrichtung beispielsweise eine integrierte GPS- oder GNSS-Antenne aufweisen, die mit einem Empfänger verbunden ist, über den kontinuierlich oder in Intervallen Positionsdaten erfasst werden. Alternativ oder ergänzend kann die Positionsbestimmung über eine Funknetzortung, etwa durch Auswertung der Signalstärke oder Zell-ID im Mobilfunknetz, oder über eine WLAN-basierte Ortung erfolgen. Die ermittelten Standortdaten können über verschiedene Kommunikationswege an eine externe Einheit, beispielsweise ein mobiles Endgerät des Nutzers oder einen Cloud-Server, übertragen werden. Hierzu kann die Vorrichtung ein Mobilfunkmodul, etwa GSM-, LTE- oder 5G-basiert, eine Satellitenverbindung oder eine andere drahtlose Kommunikationsschnittstelle, beispielsweise LoRa, Bluetooth Low Energy oder WLAN, aufweisen. In einer weiteren Ausgestaltung kann vorgesehen sein, dass die Steuereinheit die Standortdaten in regelmäßigen Intervallen oder ereignisgesteuert, beispielsweise bei Bewegung der Vorrichtung oder bei Erschütterung, übermittelt. Wird eine unbefugte Standortveränderung festgestellt, kann automatisch eine Alarmmeldung an den Nutzer ausgelöst werden. Diese kann beispielsweise eine Push-Nachricht, eine SMS oder eine E-Mail mit den aktuellen Koordinaten umfassen. Die GPS- bzw. Trackingeinheit kann integraler Bestandteil der elektronischen Steuereinheit sein oder als separates, energieautarkes Modul mit eigener Energieversorgung ausgeführt sein. Letzteres bietet den Vorteil, dass die Nachverfolgbarkeit auch dann gewährleistet bleibt, wenn die Hauptversorgungseinheit der Vorrichtung deaktiviert oder beschädigt wird. Durch die Integration der beschriebenen GPS- oder Trackingfunktion wird eine ortsunabhängige Überwachung und Verwaltung der Vorrichtung ermöglicht. Der Nutzer kann über eine Anwendungssoftware oder eine webbasierte Benutzeroberfläche jederzeit den aktuellen Standort abrufen, Bewegungsverläufe einsehen und Benachrichtigungen über Statusänderungen empfangen.

Diese Ausgestaltung verbessert die Betriebssicherheit der Vorrichtung erheblich, da sie einerseits die Wiederauffindbarkeit bei Diebstahl oder Verlust erleichtert und andererseits eine genaue Standortdokumentation und -verwaltung mehrerer Vorrichtungen im Feld erlaubt.

Eine bevorzugte Ausführungsform der Vorrichtung sieht vor, dass eine mit dem Reservoir und/oder der Ausgabeeinheit wirkverbundene Dosiereinheit vorgesehen ist und eine kontrollierte, d.h. dosierte Ausgabe von Futtermaterial in die Ausgabeeinheit über die Dosiereinheit erfolgt. Die in der Vorrichtung vorgesehene Steuereinheit ist dabei dazu ausgebildet die Dosiereinheit derart zu steuern, dass eine Ausgabe von Futtermaterial aus dem Reservoir in die Ausgabeeinheit über die Dosiereinheit erfolgt. Vorteilhaft ist dabei, dass die Futtermenge noch genauer dosiert und an den tatsächlichen Wildbestand sowie an die Zieltierart angepasst werden kann. Die jeweilige Futtermenge kann aktiv vom Reservoir in die Ausgabeeinheit und/oder die optionale Dosiereinheit gefördert werden, beispielsweise durch eine Förderschnecke, eine Rüttelförderer oder eine Schüttgutdosiervorrichtung. Alternativ kann auch eine schwerkraftbeaufschlagte Förderung erfolgen, wobei das Futtermaterial nach Öffnen einer Dosier- oder Verschlussklappe oder eines elektrisch betätigten Schieberverschluss für eine definierte Zeitdauer selbstständig in die Dosiereinheit oder direkt in die Ausgabeeinheit fällt.

Eine als vorteilhaft angesehene Weiterbildung sieht vor, dass Reservoir, die Ausgabeeinheit und optional die Dosiereinheit räumlich getrennt voneinander angeordnet sind. Dabei ist optional vorgesehen, dass Reservoir, Ausgabeeinheit und optional die Dosiereinheit über ein Schlauch- oder Leitungssystem verbunden sind. Die optionale, mit dem Reservoir und der Ausgabeeinheit wirkverbundene Dosiereinheit kann dabei als gesonderte, insbesondere zwischengeschaltete Einheit vorgesehen oder dem Reservoir oder der Ausgabeeinheit zugeordnet, insbesondere mit diesen verbunden, angeordnet werden.

Als günstig im Interesse einer auf eine bestimmte Zieltierart ausgerichteten Fütterung oder Kirrung wird angesehen, wenn in der Vorrichtung die Ausgabeeinheit einen Verschluss aufweist, der über eine auf eine aktive Betätigung durch das zu fütternde Tier abgestimmte Öffnung für eine Futterentnahme verfügt. Dies ist vergleichbar mit den herkömmlich verwendeten Kirrboxen für z.B. Schwarzwild, die derart ausgestaltet sind, dass nur / bevorzugt Wildschweine in der Lage sind, die Ausgabeeinheit zu öffnen und das dort eingefüllte Futter zu entnehmen.

Die erfindungsgemäße Vorrichtung zeichnet sich in einer bevorzugten Weiterbildung dadurch aus, dass der in der Vorrichtung vorgesehene Sensor als optischer Sensor, bevorzugt als Kamera, Füllstands-, Bewegungs- oder Berührungssensor ausgebildet ist. Der Sensor ist dabei ausgebildet, um ein erfasstes Sensorsignal zeit- oder auslösegesteuert auszugeben, wobei das erfasste Sensorsignal als Triggersignal für die Aktivierung der Vorrichtung, insbesondere der Ausgabe oder Dosiereinheit und als Auslöser für die Absendung wenigstens eines von dem Sensor erfassten Sensorsignals an den Nutzer vorgesehen ist.

Es kann so zum einen die tatsächliche Anwesenheit bzw. die Annäherung von Wild bzw. der Zieltierart festgestellt und an den Nutzer gemeldet werden, zum anderen eine Überwachung der Vorrichtung bzw. des Kirrplatzes durchgeführt werden, um Futtermaterial nur dann oder nur in einer bestimmten Menge abzugeben, wenn das zuvor verteilte Material vom Wild aufgenommen wurde und/oder das Wild sich im Bereich der Vorrichtung aufhält.

In einer Weiterbildung der Erfindung kann vorgesehen sein, dass mehrere, insbesondere verschieden ausgebildete Sensoren vorgesehen sind und die von den Sensoren erfassten Sensorsignale über die Sendeeinheit jeweils einzeln oder kombiniert an den Nutzer und/oder die Auswerteeinheit absendbar sind und wobei die jeweiligen Sensoren insbesondere unmittelbar am oder im Reservoir, an oder in der Ausgabeeinheit und/oder an oder in der Dosiereinheit vorgesehen und/oder in räumlicher Nähe zu diesen angeordnet sind. Mehrere Sensoren können auch in einer Sensoranordnung zusammengefasst oder ineinander integriert vorliegen. So kann beispielsweise eine mit einem Bewegungssensor ausgerüstete Kamera als kombinierter optischer und Bewegungssensor im Sinne der Erfindung vorgesehen werden. Die Sendeeinheit kann auch in dem Sensor oder der Sensoranordnung integriert werden, wie dies beispielsweise bei sendefähigen Kameras der Fall ist, die neben dem optischen, d.h. Kamerasensor einen Bewegungssensor und eine Sendeeinheit umfassen. Die Sendeeinheit kann dabei zum Senden der erfassten Sensorsignale (Bild/Video und Bewegungsdaten) über W-LAN-, Mobilfunk- oder Satellitennetzwerk an den Nutzer ausgebildet sein.

Dies hat den Vorteil, dass zum einen Wildbewegung im Bereich der Vorrichtung beispielsweise über Bewegungssensoren oder Berührungssensoren erfasst und durch das entsprechend ausgegebene Sensorsignal eine optische Erfassung, beispielsweise durch Aktivierung von Kamerasensoren getriggert werden kann. Es erfolgt dann die Aufzeichnung von Bilddaten (Einzelbilder oder Videosequenzen). Die Ausgabeeinheit kann dann dazu ausgebildet werden, sowohl das Sensorsignal über die Bewegung bzw. Berührung der Vorrichtung und gleichzeitig oder auf Nutzeranforderung auch ein Bildsignal an den Nutzer auszugeben. Der Nutzer wird so über grundsätzliche Aktivität, d.h. die Anwesenheit von Wild im Bereich der Vorrichtung informiert und kann selbst entscheiden, ob Bildmaterial zur Verfügung gestellt werden soll, um eine Entscheidung über die Ausgabe von Futtermaterial zu treffen, wenn es sich um die Zieltierart handelt. Alternativ erhält er das Bildmaterial gleichzeitig mit dem Informationssignal.

Eine als vorteilhaft angesehene Weiterbildung der Erfindung sieht vor, dass eine Sendeeinheit vorgesehen ist, die die Sensorsignale an die Steuereinheit oder eine Auswerte- und/oder Sendeeinheit und/oder den Nutzer weitergibt. Anhand der Sensorsignale kann dann eine Ausgabe von Futtermaterial und/oder auch einer bestimmten Menge an Futtermaterial automatisch oder per Nutzersignal ausgelöst werden. Eine unspezifische Ausgabe von Futtermaterial wird so verhindert.

Als günstig wird in diesem Zusammenhang angesehen, wenn das Sensorsignal einen Steuerbefehl an die Dosiereinheit triggert und die Abgabe von Futtermaterial automatisch oder nach Freigabe durch den Nutzer und/oder die Auswerteeinheit ausgelöst wird. Die Abgabe von Futtermaterial kann auch abhängig vom Ablauf eines definierten Zeitintervalls oder einer auszugebenden Höchstmenge, auch einer Höchstmenge innerhalb des Zeitintervalls ausgelöst bzw. gesteuert werden. Alternativ und ebenfalls vorteilhaft kann das Sensorsignal auch an eine Sendeeinheit weitergegeben werden, um einen von einem Nutzer und/oder einer Auswerteeinheit auszugebenden Steuerbefehl für eine ferngesteuerte oder automatisierte Abgabe von Futtermaterial oder auch einer bestimmten Menge an Futtermaterial, abzurufen. In jedem Fall unterbleibt eine unspezifische Ausgabe von Futtermaterial.

Eine bevorzugte Ausführungsform sieht vor, dass die Sendeeinheit, die Empfängereinheit und die Steuereinheit über ein lokales Netzwerk, ein Mobilfunknetzwerk, ein Satellitennetzwerk oder ein drahtloses Netzwerk miteinander und/oder mit dem Nutzer und/oder der Auswerteeinheit verbunden sind und Sensorsignale über das Mobilfunknetzwerk, das Satellitennetzwerk oder das drahtlose Netzwerk ausgebbar sind und die Steuerbefehle des Nutzers und/oder der Auswerteeinheit über das Mobilfunknetzwerk, das Satellitennetzwerk oder das drahtlose Netzwerk empfangbar und an die Empfängereinheit ausgebbar sind, um die Futtermittelausgabe zu veranlassen bzw. zu steuern. Somit ist eine volle Fernsteuerung und/oder eine automatisierter Betrieb der Vorrichtung möglich. Ein direkter Zugriff des Nutzers, beispielsweise im Rahmen eines wie bei herkömmlichen Vorrichtungen nötigen täglichen Kontrollganges, kann unterbleiben.

Als günstig wird ferner angesehen, wenn eine Sperrung der Ausgabe von Futtermaterial nach einer definierten Anzahl von, insbesondere täglichen, Zeitintervallen oder bei Erreichen einer definierten, insbesondere täglich, ausgegebenen Höchstfuttermenge erfolgt. Eine Sperrung kann auch erfolgen, wenn eine Mindestfüllmenge des Reservoirs unterschritten wurde. In jedem Fall wird ein entsprechendes Signal an den Nutzer und/oder die Auswerteeinheit ausgegeben.

Als günstig, insbesondere im Interesse einer einfachen Wiederbefüllung, wird ansehen, wenn das Reservoir eine wiederverschließbare Nachfüllöffnung aufweist.

In einer bevorzugten Ausführungsform weist die Vorrichtung eine autonome, insbesondere wiederaufladbare Energiequelle zur Energieversorgung der strombetriebenen Elemente der Vorrichtung, d.h. insbesondere der Ausgabeeinheit, der optionalen Dosiereinheit, des wenigstens einen Sensors, der Sendeeinheit und der Steuereinheit sowie in Ausführungsformen mit Auswerteinheit auch dieser Einheit. Die autonome, insbesondere wiederaufladbare Energiequelle zur Energieversorgung macht die Vorrichtung unabhängig von einem Stromnetz und erlaubt deren Einsatz auch an entlegenen Orten.

Eine Weiterbildung der erfindungsgemäßen Vorrichtung sieht vor, dass diese eine Auswerteeinheit zur Auswertung der empfangenen Sensorsignale und Ableitung von Steuerbefehlen und/oder der vom Nutzer empfangenen Steuerbefehle umfasst. Die Auswerteeinheit kann dabei unmittelbar in die Vorrichtung, beispielsweise als Teil der Sende- oder der Empfangseinheit ausgebildet werden und mit einer eigenständigen Rechnereinheit zur Durchführung von Rechenoperationen versehen sein. Alternativ kann die Auswerteeinheit auch als von der Vorrichtung unabhängige, auf einem Mobilgerät oder einem Rechner implementierte Einheit vorgesehen werden. Die Auswerteeinheit ist ausgebildet, um empfangene Sensordaten (Bewegungsdaten, Bild-/Videodaten) mittels eines Algorithmus zu verarbeiten und daraus Steuerbefehle abzuleiten, die dem Nutzer vorgeschlagen oder direkt an die Steuereinheit zur Umsetzung weitergegeben werden. Im weitesten Sinne ist die Auswerteeinheit als Nutzer der Vorrichtung im Sinne der Erfindung zu verstehen.

Es wird somit die Möglichkeit geschaffen, dass durch einen in der Vorrichtung vorgesehenen und bereits beschriebenen Sensor oder eine Sensorgruppe bzw. Sensoranordnung, beispielsweise einen Bewegungs- oder Berührungssensor, ein Signal erfasst wird und dadurch eine Aktivierung einer Bildaufnahme durch den ebenfalls der Vorrichtung zugeordneten optischen Sensor, d.h. eine Kamera zur Aufzeichnung von Bilddaten (Einzelbild oder Videosequenz) erfolgt. Das erfasste Kamerabild wird dann bevorzugt über die Sendeeinheit an einen Nutzer und/oder insbesondere bei Anwendung eines voll- oder teilautomatisierten Verfahrens, an die Auswerteeinheit weitergegeben.

Unter einem teilautomatisierten Verfahren ist in diesem Zusammenhang zu verstehen, dass die Empfängereinheit einen Steuerbefehl des Nutzers zur Ausgabe von Futtermaterial empfängt, die Ausgabe jedoch erst nach Auswertung des Steuerbefehls in der Auswerteeinheit anhand von definierten Zeitintervallen und/oder Höchstausgabemengen erfolgt. Hierdurch wird die Überschreitung von Höchstausgabemengen und die Ausgabe innerhalb zu kurzer Zeitintervalle vermieden und verhindert, dass nicht aufgenommenes Futtermaterial im Bereich der Vorrichtung vorhanden ist und gegebenenfalls durch eine andere als die Zieltierart aufgenommen wird.

Unter einem vollautomatisierten Verfahren ist in diesem Zusammenhang zu verstehen, dass die erfassten Sensorsignale und Bilddaten durch die Auswerteeinheit automatisiert ausgewertet und die Steuerbefehle anhand der Auswertung selbstständig abgeleitet und an die Steuereinheit ausgegeben werden. Hierdurch wird ein vollautomatisierter Betrieb der Vorrichtung erfolgen. Betrieb der Vorrichtung kann dabei auch unter Einhaltung von zeitintervall-, höchstausgabemengen- und/oder zieltierartspezifischen Vorgaben erfolgen.

Im Zusammenhang mit der vollautomatisierten Ausführung ist vorgesehen, dass in der Auswerteeinheit die Auswertung der erfassten Bilddaten, bevorzugt unterstützt durch ein eine künstliche Intelligenz (KI) aufweisendes System, automatisch und unabhängig von einem menschlichen Nutzer erfolgt. Die KI ist dabei darauf trainiert, die über die Kamera erfassten Abbildungen der die Vorrichtung aufsuchenden Tierart oder Tierarten zu bestimmen und anhand von festgelegten Kriterien eine automatische Betätigung der Vorrichtung auf der Grundlage der von der KI getroffenen Feststellung über die Tierarten vorzunehmen oder die Vorrichtung nicht zu betätigen, wenn das erfasste Tier nicht zur Zieltierart für die Fütterung gehört. Zusätzlich oder alternativ kann die Auswerteeinheit auch ein Signal an den Nutzer ausgeben, wenn die Zieltierart erkannt und/oder bestätigt wurde, um den Nutzer zur fernbedienten Auslösung der Abgabe von Futtermaterial oder zur Freigabe der auf Basis der Kl-Auswertung vorgeschlagenen Futtermaterialausgabe aufzufordern. Die Auswerteeinheit kann in diesem Zusammenhang auch Informationen über Art und Anzahl der erfassten Tierarten, bereits erfolgte Ausgaben von Futtermittel, Zeitintervalle der Ausgabe, Futtermittelmengen und der-gleichen an den Nutzer auswerten und an den Nutzer senden, um dessen Entscheidungsfindung zu unterstützen, die Futtermittelabgabe beispielsweise mit Einstellung der abzugebenden Futtermenge, durch Ausgabe eines Steuerbefehls auszulösen. Als günstig wird in diesem Zusammenhang angesehen, wenn die KI einen maschinellen Lernalgorithmus umfasst und der Lernalgorithmus bevorzugt ein neuronales Netzwerk umfasst, das auf einen Datensatz von Bildern von einer oder mehreren Tierarten trainiert wird.

Als günstig erweist sich, wenn zur Betätigung der Dosiereinheit und/oder der Ausgabeeinheit mechanisch oder elektrisch betätigte Aktuatoren vorgesehen sind, wobei die Aktuatoren bevorzugt durch einen von der Steuereinheit ausgebbaren Steuerbefehl und/oder ein zu fütterndes Tier betätigbar sind.

Der Begriff Aktuator bezeichnet im technischen Sinne ein Stellglied, das ein mechanisches, elektrisches, hydraulisches oder pneumatisches Eingangssignal in eine mechanische Bewegung umwandelt. Aktuatoren dienen somit der aktiven Umsetzung eines Steuerbefehls in eine physische Aktion, etwa das Öffnen, Schließen, Drehen oder Verschieben eines Bauteils. Im Zusammenhang mit der erfindungsgemäßen Vorrichtung können Aktuatoren beispielsweise in Form von Elektromotoren, Linearantrieben, Magnetventilen oder Servoantrieben oder einfache mechanische Betätigungselement wie beispielsweise eine verschwenk- oder verschiebbare Platte oder Scheibe, ausgeführt sein. Sie können insbesondere dazu dienen, die Dosiervorrichtung oder wie in einigen Ausführungsform beispielsweise einen Drehteller oder ein Flügelrad der Dosiereinheit anzutreiben, eine Auslassöffnung zu öffnen oder zu schließen, eine Scheibe oder Klappe zu bewegen oder eine Sperrvorrichtung zu lösen. Durch den Einsatz von elektrisch betätigten Aktuatoren kann die Vorrichtung gezielt und reproduzierbar auf elektronische Steuerbefehle reagieren, die entweder automatisch auf Grundlage von Sensorsignalen oder manuell durch den Nutzer übermittelt werden. Dadurch wird eine präzise, zeitlich steuerbare und insbesondere artselektive Futterfreigabe ermöglicht. Durch den Einsatz von mechanisch betätigten Aktuatoren kann die Vorrichtung gezielt und reproduzierbar auf die Anforderung durch das zu fütternde Tier reagieren, das die Futtermenge aus der Ausgabeeinheit aktiv entnehmen will. Dadurch wird eine artselektive, d.h. auf die jeweilige Zieltierart abgestimmte Futterfreigabe ermöglicht.

Ein besonderer Vorteil dieser Ausgestaltung liegt in der hohen Flexibilität der Systemsteuerung: Die Aktuatoren können in Abhängigkeit von erkannten Tierarten, Uhrzeiten, vordefinierten Futterintervallen oder Füllstandsdaten aktiviert werden. Ferner erlaubt der elektrische Betrieb eine einfache Integration in das Gesamtsystem der Vorrichtung, sodass die Steuerung zentral durch eine Steuereinheit oder sogar über eine externe Kommunikationsschnittstelle erfolgen kann. Darüber hinaus ermöglichen die verwendbaren Aktuatoren eine kompakte Bauweise ohne komplexe Mechanik, einen energieeffizienten Betrieb und eine hohe Zuverlässigkeit auch bei wechselnden Witterungsbedingungen. Besonders in Verbindung mit einem autarken Energieversorgungssystem, beispielsweise durch Akku oder Solarzelle, ergibt sich eine langlebige, wartungsarme und präzise arbeitende Futterausgabevorrichtung.

Eine als vorteilhaft angesehene Weiterbildung sieht vor, dass die Vorrichtung zwei oder mehr Reservoirs für Futtermaterialen für zwei oder mehr unterschiedliche Tierarten aufweist. Die Ausgabe von Futtermaterial aus einem oder mehreren der Reservoir(s) kann dann in Abhängigkeit von einer oder mehreren, jeweils erkannten Tierart(en) erfolgen und eine noch spezifischere Fütterung bzw. Anlockung von Tieren erfolgen. Auch lässt sich so das Einsatzspektrum der Vorrichtung erweitern und neben der Lockfütterung beispielsweise auch eine Notzeit- oder Ablenkfütterung durchführen.

Eine als vorteilhaft angesehene Weiterbildung sieht vor, dass in der Dosiereinheit ein insbesondere elektrisch angetriebenes Dosierelement, insbesondere ein Drehteller oder ein Flügelrad vorgesehen ist und eine Betätigung des Dosierelementes in Abhängigkeit von dem aus den empfangenen Sensorsignalen ableitbaren Steuerbefehlen und/oder der vom Nutzer empfangenen Steuerbefehle erfolgt. Der Drehteller kann dabei bevorzugt horizontal angeordnet und über einen Antrieb drehbar gelagert sein. Auf seiner Oberseite kann sich eine bestimmte Menge des aus dem Reservoir nachrutschenden Futtermaterials sammeln. Wird der Drehteller in Drehung versetzt, transportiert er das aufliegende Material gezielt in Richtung der Auslassöffnung, über die das Futtermaterial in die Ausgabeeinheit übergeht und dort abgegeben wird oder entnommen werden kann. Durch die Steuerung der Drehgeschwindigkeit, des Drehwinkels oder der Aktivierungsdauer lässt sich die ausgegebene Futtermengenportion exakt definieren. Nach Erreichen der vorgegebenen Portion kann der Drehteller in seine Ausgangsposition zurückgeführt und der Zufluss aus dem Reservoir unterbrochen werden.

Alternativ oder zusätzlich kann das Dosierelement als Flügelrad ausgeführt sein, das in einer Dosierkammer angeordnet ist und durch Drehbewegung einzelne Futterportionen in Richtung der Auslassöffnung befördert. Das Flügelrad kann dabei radial angeordnete Flügel oder Schaufeln aufweisen, die das Material in definierten Portionen abgeben. Eine derartige Ausgestaltung erlaubt auch bei körnigen oder unterschiedlich rieselfähigen Futtermaterialien eine gleichmäßige und wiederholgenaue Dosierung.

Die Steuerung des Drehtellers oder Flügelrads erfolgt vorzugsweise nutzergesteuert oder automatisch in Abhängigkeit von den durch Sensoren oder optische Erfassungseinheiten, beispielsweise Kameras, detektierten Informationen. So kann beispielsweise bei bzw. nach Anwesenheit einer freigabeberechtigten Tierart, etwa Schwarzwild, eine Aktivierung des Dosierelements ausgelöst werden, während bei anderen erkannten Tierarten eine Sperre der Futterausgabe erfolgt. Alternativ oder ergänzend kann die Aktivierung durch den Nutzer über eine Fernverbindung, etwa über eine mobile Anwendung oder eine Kommunikationsschnittstelle, erfolgen. Diese Ausgestaltung bietet mehrere technische Vorteile. Zum einen wird durch das aktive Dosierelement eine präzise und reproduzierbare Futtermenge je Ausgabevorgang erreicht, unabhängig von Futterkörnung, Füllstand oder Umgebungseinflüssen. Zum anderen kann durch die elektronische Steuerung eine zeitliche Begrenzung der Futterfreigabe sowie eine Summenbegrenzung pro Tag oder Tierkontakt implementiert werden, wodurch eine Überfütterung vermieden wird. Weiterhin kann die Kombination aus Sensorik und steuerbarem Dosierelement eine artselektive Futterabgabe ermöglichen, da nur bei oder / und nach Anwesenheit der gewünschten Tierart eine Drehbewegung des Drehtellers oder Flügelrads erfolgt. Schließlich kann der elektrische Antrieb einen energieeffizienten und leisen Betrieb erlauben, der in Verbindung mit Akkubetrieb und optionaler Solarstromversorgung einen autarken und wartungsarmen Langzeiteinsatz ermöglicht. Insgesamt ermöglicht die beschriebene Dosiereinheit mit steuerbarem Drehteller oder Flügelrad eine intelligente, automatisierte und zieltierartgerechte Steuerung der Futterabgabe, die gezielt in das Gesamtsystem der Vorrichtung integriert werden kann und eine präzise Fernsteuerung und Überwachung über die Kommunikationsschnittstellen der Vorrichtung ermöglicht.

In einem Verfahren zur fernbedienten und/oder automatischen Ausgabe von Futtermaterial aus einer wie zuvor beschriebenen Vorrichtung kann die Ausgabe von Futtermaterial sowohl durch einen Nutzer fernbedient wie auch in einer optionalen Ausführung teil- oder vollautomatisiert durch Verwendung einer Sensorsteuerung und/oder über der Vorrichtung zugeordnete Auswerteinheit erfolgen kann.

Das Verfahren umfasst dabei wenigstens die Schritte:
- Erfassen wenigstens eines Sensorsignal durch den wenigstens einen Sensor;
- Senden des Sensorsignals an einen Nutzer und/oder eine Auswerteeinheit;
- Auswerten des Sensorsignals durch den Nutzer und/oder die Auswerteeinheit;
- Definition wenigstens eines Steuerbefehls auf Basis des empfangenen Sensorsignals durch den Nutzer und/oder die Auswerteeinheit;
- Absenden des Steuerbefehls an die Empfängereinheit;
- Ausgabe von Futtermaterial aus dem Reservoir an die Ausgabeeinheit auf Basis des wenigstens eines empfangenen Steuerbefehls; und
- Entnahme des Futtermaterials aus der Ausgabeeinheit durch ein zu fütterndes Tier.

Das mit der erfindungsgemäßen Vorrichtung durchführbare Verfahren kann dabei in einem Ausführungsbeispiel folgendermaßen ablaufen:
- In der Ausgabeeinheit liegt bereits bereitgestelltes Futtermaterial für die Zieltierart, insbesondere beispielsweise für Schwarzwild, vor.
- Nach einer gewissen Zeit erscheint die Zieltierart, beispielsweise insbesondere Schwarzwild, am Fütterungsplatz und entnimmt das Futtermaterial aktiv aus der Ausgabeeinheit.
- Mehr oder weniger zeitgleich kann der Jäger und/oder eine Auswerteeinheit und/oder eine zentrales oder dezentrales Auswerte- oder Kommunikationssystem informiert werden, dass die Zieltierart, beispielsweise insbesondere Schwarzwild, am Fütterungsplatz detektiert wurde. Diese Information kann automatisch durch Sensorik oder Bilderkennung generiert und über eine Kommunikationsschnittstelle, etwa per App, Push-Nachricht oder Mobilfunk, übermittelt werden.
- Die Zieltierart, beispielsweise insbesondere Schwarzwild, frisst das bereitgestellte Futtermaterial, d.h. es entnimmt das in der Ausgabeeinhiet vorgelegte Futtermaterial und zieht nach einer gewissen Verweildauer, beispielsweise nach etwa 30 bis 60 Minuten, wieder aus dem Bereich der Vorrichtung ab.
- Nach dem Verschwinden der Zieltierart, beispielsweise insbesondere Schwarzwild, kann erneut eine bestimmte Menge Futtermaterial in die Ausgabeeinheit eingebracht werden, um die Vorrichtung für den nächsten Besuch vorzubereiten. Dieser Vorgang kann in gleicher Weise wiederholt werden, bis das für den jeweiligen Tag definierte Futterlimit erreicht ist.

Durch diesen Ablauf wird erreicht, dass Futter- bzw. Lockmaterial nur dann zur Verfügung steht, wenn tatsächlich die Zieltierart, beispielsweise insbesondere Schwarzwild, anwesend ist, und dass die Futtermenge kontrolliert, reproduzierbar und dokumentierbar abgegeben wird.

Aus dem Stand der Technik ist bekannt, dass Fütterungsvorrichtungen für Wild gleichzeitig mit der Erkennung eines Tieres automatisch Futtermaterial ausgeben. In der Praxis kann sich jedoch zeigen, dass vorsichtige Tiere, insbesondere die Zieltierart Schwarzwild, auf das Geräusch oder die plötzliche Bewegung solcher Vorrichtungen empfindlich reagieren und sich dadurch häufig erschrecken oder dauerhaft die Vorrichtungen meiden. Zudem muss die Zieltierart bei den bekannten Systemen nicht aktiv werden, um Futter zu entnehmen, da das Material offen auf dem Boden oder in einer offenen, d.h. frei zugänglichen Auffangfläche ausgebracht wird.

Dies kann zu verschiedenen Nachteilen führen: So kommt es vor, dass die Zieltierart, insbesondere Schwarzwild, zwar am Fütterungsplatz vorbeizieht, das angebotene Futter jedoch nicht annimmt, weil sie beispielsweise bereits gesättigt ist, sich auf dem Rückweg in die Einstände befindet oder lediglich eine nahegelegene Suhle oder Salzlecke aufsuchen will. In solchen Fällen bleibt das ausgegebene Futter ungenutzt liegen und kann für Nichtzielarten zugänglich sein. Dadurch entstehen hygienische Probleme, eine unkontrollierte Futterverteilung und eine mögliche Beunruhigung des Wildes durch vermehrte Aktivität anderer Tierarten.

Demgegenüber wird mit dem erfindungsgemäßen Verfahren vorteilhaft erreicht, dass die Zieltierart, insbesondere Schwarzwild, aktiv in den Fütterungsvorgang eingebunden wird, da die Zieltierart, insbesondere Schwarzwild selbst eine Bewegung, etwa durch Betätigung einer Stange oder durch aktives Fressen aus der Ausgabeeinheit, ausführt, um das bereitgestellte Futter zu entnehmen. Die Futterfreigabe erfolgt dabei kontrolliert, zeitlich begrenzt und abhängig von einem zuvor erzeugten Triggersignal, beispielsweise durch Sensorik, Bilderkennung oder eine Fernfreigabe.

Diese Kombination aus selektiver Freigabe, aktivem Futterzugang, d.h. gerichteter Entnahme durch die Zieltierart und automatischer Nachdosierung ermöglicht ein tierschutzgerechtes, ökonomisches und rechtssicheres Fütterungssystem, das eine effiziente Unterstützung des jagdlichen Betriebs bei gleichzeitig minimaler Beunruhigung des Wildes gewährleistet.

Das Sensorsignal kann im Verfahren als Triggersignal zur direkten Aktivierung der Vorrichtung dienen und die voll- oder teilautomatisierte Ausgabe von Futtermaterial im Rahmen von definierten Zeitintervallen oder Höchstausgabemengen veranlassen oder dazu dienen den Nutzer zur Ausgabe eines Steuerbefehls zu veranlassen, indem nach Empfang des Sensorsignals der Nutzer direkt über die Aktivität im Bereich der Vorrichtung informiert wird und/oder zur Ausgabe eines Steuerbefehls zur Ausgabe von Futtermittel auffordert. In einer weiteren Ausführungsform kann das Triggersignal als Auslöser für die Aufzeichnung von Bilddaten (Einzelbild oder Videosequenzaufzeichnung) durch einen optischen Sensor, d. h. insbesondere eine Kamera verwendet werden. Über die Sendeeinheit kann danach sowohl die Information über Aktivität im Bereich der Vorrichtung wie auch das zugehörige Bildmaterial an den Nutzer und/oder die Auswerteeinheit abgesendet werden, um diesem und/oder dieser die Möglichkeit zur Entscheidung über die Aktivierung der Vorrichtung bzw. die Ausgabe von Futtermaterial zu geben.

Es wird somit die Möglichkeit geschaffen, dass durch einen in der Vorrichtung vorgesehenen Sensor, beispielsweise einen Bewegungs- oder Berührungssensor, ein Signal erfasst wird und dadurch eine Aktivierung einer Bildaufnahme durch den ebenfalls der Vorrichtung zugeordneten optischen Sensor, d.h. eine Kamera zur Aufzeichnung von Bilddaten (Einzelbild oder Videosequenz) erfolgt. Das erfasste Kamerabild wird dann bevorzugt über die Sendeeinheit an einen Nutzer und/oder, insbesondere bei Anwendung eines voll- oder teilautomatisierten Verfahrens, an eine Auswerteeinheit weitergegeben.

In einem teil- oder vollautomatischen Verfahren zur Ausgabe von Futtermaterial erfolgt die kontrollierte Abgabe von Futtermaterial, insbesondere Wildfutter oder Kirrgut, aus wenigstens einem Reservoir für das Futtermaterial in eine dem Reservoir zugeordnete Ausgabeeinheit, optional über eine Dosiereinheit.

Unter einem teilautomatisierten Verfahren ist in diesem Zusammenhang zu verstehen, dass die Empfängereinheit einen Steuerbefehl des Nutzers zur Ausgabe von Futtermaterial empfängt, die Ausgabe jedoch anhand von definierten Zeitintervallen und/oder Höchstausgabemengen erfolgt. Hierdurch wird die Überschreitung von Höchstausgabemengen und die Ausgabe innerhalb zu kurzer Zeitintervalle vermieden und verhindert, dass nicht aufgenommenes Futtermaterial im Bereich der Vorrichtung vorhanden ist und gegebenenfalls durch eine andere als die Zieltierart aufgenommen wird.

Unter einem vollautomatisierten Verfahren ist in diesem Zusammenhang zu verstehen, dass die erfassten Bildsignale durch eine der Vorrichtung zusätzlich integrierte oder auch entfernt von dieser vorgesehenen physische Auswerteeinheit oder eine virtuelle, d.h. auf einem Rechner oder einem Server betriebene Auswerteeinheit, automatisiert ausgewertet und die Steuerbefehle anhand der Auswertung selbstständig abgeleitet und an die Steuereinheit ausgegeben werden. Hierdurch wird ein vollautomatisierter Betrieb der Vorrichtung, jedoch bevorzugt unter Einhaltung von zeitintervall-, höchstausgabemengen- und/oder zieltierartspezifischen Vorgaben ermöglicht.

Im Zusammenhang mit der vollautomatisierten Ausführung des Verfahrens kann in einer Auswerteeinheit die Auswertung der erfassten Bilddaten bevorzugt unterstützt durch ein eine künstliche Intelligenz (KI) aufweisendes System automatisch und nutzerunabhängig erfolgen. Die KI ist dabei darauf trainiert, die über die Kamera erfassten Abbildungen der die Vorrichtung aufsuchenden Tierart oder Tierarten zu bestimmen und anhand von festgelegten Kriterien eine automatische Betätigung der Vorrichtung auf der Grundlage der von der KI getroffenen Feststellung über die Tierart/Tierarten vorzunehmen oder die Vorrichtung nicht zu betätigen, wenn das erfasste Tier nicht zur Zieltierart für die Fütterung gehört. Zusätzlich oder alternativ kann die Vorrichtung auch ein Signal an den Nutzer ausgeben, wenn die Zieltierart erkannt und/oder bestätigt wurde, um den Nutzer zur fernbedienten Auslösung der Abgabe von Futtermaterial oder zur Freigabe der auf Basis der Kl-gestützten Auswertung vorgeschlagenen Futtermaterialausgabe aufzufordern. Die Vorrichtung kann in diesem Zusammenhang auch Informationen über Art und Anzahl der erfassten Tierarten, bereits erfolgte Ausgaben von Futtermittel, Zeitintervalle der Ausgabe, Futtermittelmengen und dergleichen an den Nutzer senden, um dessen Entscheidungsfindung zu unterstützen, die Futtermittelabgabe beispielsweise mit Einstellung der abzugebenden Futtermenge, durch Ausgabe eines Steuerbefehls auszulösen. Als günstig wird in diesem Zusammenhang angesehen, wenn die KI einen maschinellen Lernalgorithmus umfasst und der Lernalgorithmus bevorzugt ein neuronales Netzwerk umfasst, das auf einen Datensatz von Bildern von einer oder mehreren Tierarten trainiert wird.

Für die Steuerung der Vorrichtung besteht die Möglichkeit, dass dem Nutzer eine auf einem Mobilgerät oder einem Rechner installierte Software bevorzugt als sog. App, zur Verfügung gestellt wird, die sowohl die Sensorsignale und/oder Bilddaten erfasst und anzeigt und/oder den Nutzer über Aktivität im Bereich der Vorrichtung beispielsweise über eine sog. PUSH-Mitteilung informiert. Die Software kann dem Nutzer auch die Möglichkeit zur Verfügung stellen, einen Steuerbefehl einzugeben, der dann über ein Netzwerk, insbesondere ein lokales Netzwerk, ein Mobilfunknetzwerk, ein Satellitennetzwerk oder ein drahtloses Netzwerk an die Vorrichtung ausgegeben und dort in der Empfängereinheit empfangen wird. Der Steuerbefehle kann dabei über die App oder in an sich bekannter Form ausgegeben werden, beispielsweise über ein Anrufsignal oder ein softwaremoduliertes von der Empfängereinheit verarbeitbares Steuersignal. Das Steuersignal umfasst dabei sämtliche relevanten Steuerbefehle.

Die Software kann dem Nutzer zusätzliche Wahl- oder Eingriffsmöglichkeiten zur Verfügung stellen. So kann über die Software auch eine Mengen- oder Zeitintervallsteuerung für die Ausgabe des Futtermaterials eingestellt werden. Die Software kann auch dazu ausgebildet werden, Informationen über den Füllstand des Reservoirs, den Status der Vorrichtung, beispielsweise deren ordnungsgemäße Funktion, Fehlermeldungen und/oder Umgebungsbedingungen (Temperatur, Luftfeuchte etc.) an oder in der Vorrichtung) zu empfangen und Warnhinweise auszugeben. Über die Software kann auch eine Aufzeichnung historischer Daten und deren statistische Auswertung erfolgen.

In die Software kann auch die Möglichkeit zur automatisierten oder teilautomatisierten Steuerung, beispielsweise als zusätzliches Softwaremodul, integriert werden. Die Daten der automatisierten Auswertung, beispielsweise die vorher beschriebene Kl-unterstützte Auswertung, können dem Nutzer in der Software zur Verfügung gestellt werden, um diesem als Entscheidungshilfe für die Ausgabe eines Steuerbefehls zu dienen. Alternativ kann über die Software auch die Freigabe für die automatisierte Ausgabe des Futtermaterials als optionaler nutzerabhängiger Zwischenschritt angefordert werden. Über die Software kann auch eine Umschaltung zwischen dem voll durch den nutzergesteuerten d.h. fernbedienten, dem teilautomatisierten und dem vollautomatisierten Betrieb der Vorrichtung bzw. der Ausführung des Verfahrens, letztere mit optional notwendiger Nutzerfreigabe, erfolgen. Über die Software kann auch die Sperrung oder Entsperrung der Vorrichtung erfolgen.

Eine Ausführungsform des Verfahrens sieht vor, dass die Steuereinheit und die Empfängereinheit für den Empfang von Steuerbefehlen eingerichtet sind, sodass eine insbesondere unmittelbare weiterer Abgabe von Futtermaterial nach einer ersten Auslösung der Abgabe von Futtermaterial durch ein Tier, insbesondere ein Tier einer erkannten Zieltierart durchführbar ist, sofern die in der Steuereinheit hinterlegten zeitintervall- und/oder höchstmengenabhängigen Steuerbefehle dies zulassen.

Das Verfahren erlaubt in diesem Fall ebenfalls einen teilautomatisierten Betrieb der Vorrichtung, wobei eine Steuerung durch direkte Anforderung von Futtermittel durch ein Tier erfolgt. Die Vorrichtung weist in dieser Ausführungsform einen durch das Tier geeigneten Auslösemechanismus auf, der direkt auf das Reservoir für das Futtermaterial, die wenigstens eine dem Reservoir zugeordnete Ausgabeeinheit oder die Dosiereinheit einwirkt. Dabei kann auch im Zusammenhang mit dieser Ausführungsform bei oder nach der Anforderung der weiteren Ausgabe von Futtermittel ein Signal an einen Nutzer ausgegeben werden, um diesen über den Betrieb der Vorrichtung zu informieren und die weitere Futtermittelausgabe zu steuern. Darüber hinaus oder alternativ hierzu kann auch die oben beschriebene, insbesondere Kl-unterstützte Auswertung insbesondere zur Tierarterkennung verwendet werden um die Futterausgabe, optional mit Nutzerfreigabe, zu steuern oder zu sperren.

Anhand eines Ausführungsbeispiels wird nachfolgend der Ablauf des Verfahrens und die Nutzung der Vorrichtung kurz dargestellt:
Die in der Vorrichtung vorgesehenen Bewegungssensoren, die an oder im Umfeld der Vorrichtung angeordnet oder beispielsweise in einer speziellen Wildkamera integriert sind, detektieren die Anwesenheit eines Tieres, d.h. eines potenziellen Zieltiers für die Fütterung. Das Sensorsignal des Bewegungssensors triggert dann die Aufnahme von Bild- oder Videodaten über die Wildkamera. Gleichzeitig wird über die Sendeeinheit ein Sensorsignal an den Nutzer abgesendet. Zusammen mit dem Sensorsignal können auch die aufgenommenen Bild- oder Videodaten, unmittelbar als Sensorsignal oder als weiteres Sensorsignal, an den Nutzer versendet werden, beispielsweise direkt durch die Sendefähige Wildkamera. Der Nutzer kann die beispielsweise auf seinem Smartphone oder seinem Computer erhaltenen Bild- oder Videodaten auswerten und feststellen, ob es sich um die Zieltierart für die Fütterung handelt. Der Nutzer kann nun entscheiden, ob die Ausgabe von Futtermaterial veranlasst werden soll. Hierzu gibt der Nutzer einen Steuerbefehl aus, der an die Vorrichtung gesendet und in der Empfängereinheit der Vorrichtung empfangen wird. Nach Empfang des Steuerbefehls steuert die in der Vorrichtung vorgesehene Steuereinheit eine Ausgabe von Futtermaterial aus dem Reservoir in die Ausgabeeinheit der Vorrichtung, aus der das Tier das Futtermaterial dann entnehmen kann.

Der Steuerbefehl kann in einer einfachen Ausführung als Anruf, d.h. Ausgabe eines durch die Empfängereinheit der Vorrichtung empfangbaren Anrufsignals, ausgebildet sein. Der Nutzer wählt hierzu eine definierte Telefonnummer und bei Eintreffen des Anrufsignals in der Empfängereinheit wird das Anrufsignal als Steuerbefehl für die Steuereinheit interpretiert und die Ausgabe einer definierten Menge an Futtermaterial veranlasst. Durch mehrfache Ausgabe des Anrufsignals, d.h. mehrfachen Anruf der definierten Telefonnummer, kann die Ausgabe der definierten Menge mehrfach ausgegeben werden. Die maximal ausgebbare Menge kann in der Steuereinheit oder durch den Nutzer selbst reguliert werden. Wird die einmalige Ausgabemenge begrenzt, kann durch mehrfache Ausgabe des Anrufsignals durch den Nutzer diese Menge mehrfach, bis zum Erreichen einer höchstzulässigen Menge ausgegeben werden. Bei beispielhafter Begrenzung der einmaligen Ausgabemenge auf 0.5kg und einer vom Nutzer gewünschten oder gesetzlich vorgegebene maximalen täglichen Ausbringungsmenge von 3kg müsste der Nutzer insgesamt sechsmal des Anrufsignal ausgeben, um die maximale tägliche Ausbringungsmenge zu erreichen.

Die Erfindung wird nachfolgend anhand von Ausführungsbeispielen und dazugehöriger Zeichnungen näher erläutert. Es zeigt:
- **Fig. 1**: eine schematische Darstellung einer Ausführungsform der erfindungsgemäßen Vorrichtung;
- **Fig. 2**: eine schematische Darstellung einer weiteren Ausführungsform der erfindungsgemäßen Vorrichtung;
- **Fig. 3**: eine schematische Darstellung eines Details der erfindungsgemäßen Vorrichtung;
- **Fig. 4**: eine schematische Darstellung eines Details der erfindungsgemäßen Vorrichtung;
- **Fig. 5**: eine schematische Darstellung einer weiteren Ausführungsform der erfindungsgemäßen Vorrichtung; und
- **Fig. 6**: eine schematische Darstellung einer weiteren Ausführungsform der erfindungsgemäßen Vorrichtung

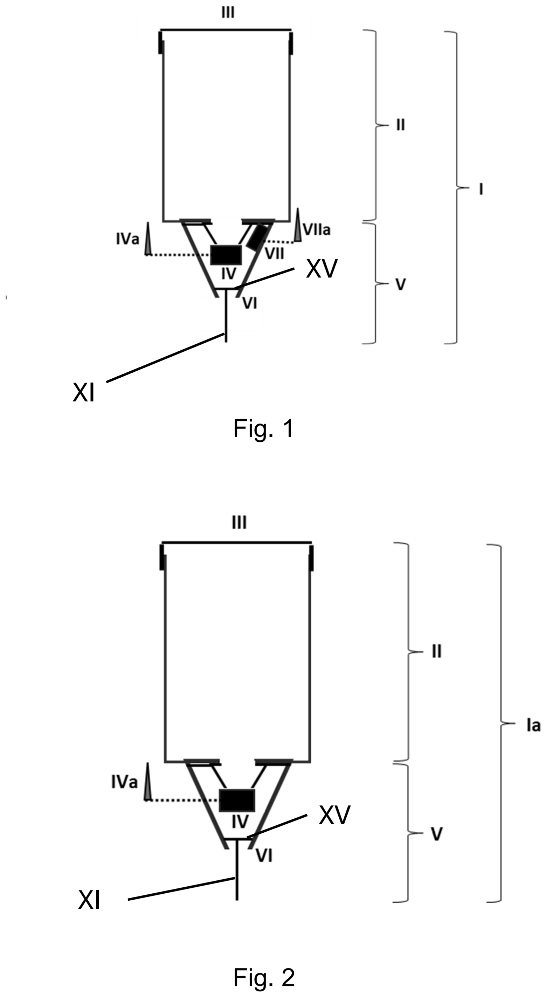

Fig. 1 und 2 zeigen schematisch den Aufbau der erfindungsgemäßen Vorrichtung **I.** Futtermaterial, nachfolgend auch als Kirrgut oder Kirrfutter bezeichnet, wie zum Beispiel Mais- oder Getreidekörner, befindet sich im Reservoir **II** mit der verschließbaren Nachfüllöffnung **III.** Über die Dosiereinheit **IV** erfolgt die kontrollierte Futterabgabe an die Ausgabeeinheit **V.** Die Dosiereinheit **IV** besitzt im Ausführungsbeispiel eine Empfängereinheit **IVa,** die auf ein Mobilfunknetzwerk, ein Satellitennetzwerk oder ein drahtloses Netzwerk zurückgreift, und so Befehle zur Futterabgabe z.B. von einem Smartphone oder Computer erhalten kann, z.B. durch einen Anruf, eine Textmitteilung oder einen in einer Software oder App eingegebenen und entsprechend weitergeleiteten Nutzerbefehl. Alternativ oder zusätzlich kann ein Steuersignal von einer die Sensorsignale oder das Sensorsignal auswertenden Auswerteeinheit empfangen werden. Dabei kann die Menge des abgegebenen Kirrfutters gezielt variiert werden, z.B. durch entsprechend hinterlegte Steuerbefehle, bzw. Konfiguration der Steuerbefehle über eine Software oder den Nutzer, die z.B. verschiedene Abgabezeiten und damit Abgabemengen ermöglichen. Aus der Ausgabeeinheit **V** können in einer Ausführungsform bevorzugt bzw. exklusiv Wildschweine das Kirrgut/Futtermaterial an der Stelle bzw. Auslassöffnung **VI** entnehmen. Entnahme von Kirrgut durch Schwarzwild an der Auslassöffnung **VI** wird durch mindestens eine, in Fig. 1 dargestellte elektronische sensorische Vorrichtung bzw. einen elektronischen Sensor **VII** überwacht. Als geeignete Sensoren **VII** kommen z.B. in Frage ein optischer Sensor, beispielsweise eine Kamera, ein Bewegungsmelder, ein Berührungssensor oder ein Füllstandmessgerät. Zudem ist der Sensor **VII** mit einer Sendeeinheit gekoppelt, die beispielsweise auf ein Mobilfunknetzwerk, ein Satellitennetzwerk oder ein drahtloses Netzwerk zurückgreift, und so Informationen zur Futterabgabe an z.B. Wildschweine oder sonstiges Wild einer Zieltierart, an ein Smartphone, Computer oder andere geeignete Empfangsgeräte meldet. Die Meldung kann App-basiert erfolgen, beispielsweise als PUSH-Nachricht oder z.B. auch per Sprachanruf, SMS, Sprach- bzw. Textnachricht oder Bild bzw. Video-Übertragung.

Elektronische Sensoren **VII** können in der erfindungsgemäßen Vorrichtung **I** verbaut sein, oder davon losgelöst davon im Bereich der Vorrichtung **I,** beispielsweise an einer Kirrung installiert sein. Der Sensor **VII** kann auch mehrere verbundenen Sensoren umfassen und als Sensoranordnung oder Sensoreinheit zur Verfügung gestellt werden. Der oder die Sensoren **VII** können dabei derart ausgerichtet werden, dass sie die Vorrichtung und deren Umfeld erfassen. Die Meldung des Sensors **VII** kann entweder nach programmierten Zeiten oder durch Bewegung im Bereich der Vorrichtung, z.B. durch anwechselndes Wild, die aktuelle Futterabgabe oder durch eine aktive Anforderung des Nutzers erfolgen. Auch Kombinationen aus mehreren elektronischen Sensoren **VII** sind denkbar. Im Ausführungsbeispiel der Fig. 1 ist der Sensor als eine sendefähige Kamera **VIIa,** bevorzugt mit integriertem Bewegungssensor, ausgebildet und in die Vorrichtung **I** integriert, ohne die Erfindung hierauf zu beschränken. Die Vorrichtung **I** kann z.B. auf ein geeignetes Podest gestellt und befestigt werden. Eine andere Möglichkeit bietet die Aufhängung der erfindungsgemäßen Vorrichtung **I** entweder an einen Baum oder an einer geeigneten Aufhängeeinrichtung wie z.B. einem Dreibein.

Durch die Meldungen des Sensors **VII/VIIa** erhält der Nutzer bzw. Jäger alle Informationen, um per Fernauslösung eine kontrollierte Futterabgabe über die Dosiereinheit **IV** aus dem Reservoir **II** an die Ausgabeeinheit **V** vorzunehmen. So ist eine selektive Kirrfütterung einer Zieltierart, beispielsweise von Schwarzwild, sichergestellt, und auch die maximal zulässige, tägliche ausgegebene Menge an Futtermaterial, d.h. die zulässige Kirrmenge insbesondere entsprechend den Vorschriften gemäß einer lokalen Jagdgesetzgebungen kann eingehalten werden, da dem Nutzer alle nötigen Informationen vorliegen. Eine solche, ferngesteuerte Futtermaterial/Kirrfutterausgabe durch die Vorrichtung **I** erfolgt manuell, und stellt keine automatische Kirrung nach eingestellten täglichen Programmen wie in bekannten Kirrautomaten im klassischen Sinne dar.

Die erfindungsgemäße Vorrichtung **I** bestehend aus einem Reservoir **II** mit verschließbarer Nachfüllöffnung **III,** Dosiereinheit **IV,** Ausgabeeinheit **V,** Abgabestelle bzw. verschließbare (Auslass)Öffnung **VI** und Sensor **VII** ist Gegenstand dieser Erfindung.

Mit der Vorrichtung **I** ist die Durchführung eines Verfahrens zur Ausgabe von Futtermaterial im Rahmen einer Kirrung bzw. Lockfütterung bzw. Fütterung von Tieren, insbesondere Wildtieren möglich.

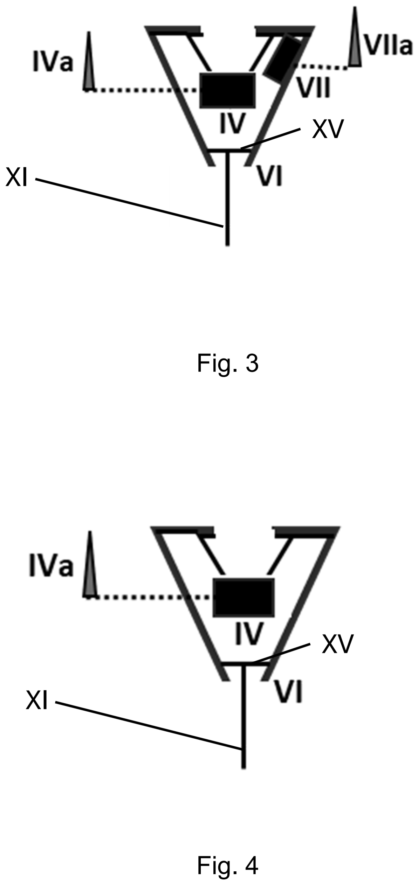

Die Vorrichtung **I** kann hergestellt werden, indem die Ausgabeeinheit **V** mit dem Reservoir **II** mit verschließbarem Deckel **III** verbunden wird, z.B. durch Verschrauben. Als Reservoir **II** mit Deckel **III** kann z.B. im einfachsten Fall ein Deckelfass dienen, mit bevorzugt kreisrundem Loch im Boden. Fig. 3 und 4 zeigen die Einheit **V,** jeweils mit bzw. ohne Sensor **VII/VIIa.**

Optional kann die Vorrichtung **I** weitere Elemente umfassen, wie z.B. eine Aufhängung **XIV** bzw. Aufhängevorrichtung.

In einer weiteren Ausführungsvariante kann die Vorrichtung I auf einem Podest stehen und optional mit diesem verbunden sein. Diese Ausführungsvariante ist ebenfalls von der Erfindung umfasst.

In einer bevorzugten Ausführungsvariante ist der Sensor **VII** nicht direkt mit der Vorrichtung **I** verbunden, sondern befindet sich in der Umgebung **Ia** der Vorrichtung **I.** Diese daraus resultierende Vorrichtung **I** mit nicht unmittelbar verbundenen aber mit der Vorrichtung **I** in Wirkzusammenhang stehendem und in deren Umgebung **Ia** angeordnetem Sensor **VII/VIIa** ist ebenfalls Gegenstand dieser Erfindung. Abbildung 2 zeigt eine weitere Ausführungsform der erfindungsgemäßen Vorrichtung **I.**

In einer weiteren Ausführungsvariante ist eine zentrale Empfängereinheit **IVa,** die auf ein Mobilfunknetzwerk, ein Satellitennetzwerk oder ein drahtloses Netzwerk zurückgreift vorgesehene, um Befehle zur Futterabgabe z.B. von einem Smartphone oder Computer oder über die Eingabe in einer dort betriebenen App erhalten kann, z.B. durch einen Anruf, eine Textnachricht oder eine Nutzereingabe in der App, die dann als Steuerbefehl umgewandelt und an die Empfängereinheit **IVa** versendet wird.

Die Materialien, aus denen die einzelnen Bauteile der erfindungsgemäßen Vorrichtung **I** hauptsächlich bestehen, können breit variieren. So kann beispielsweise das Reservoir **II** mit verschließbaren Deckel **III** aus Kunststoff wie z.B. HDPE und/oder Metall und/oder sogar Gewebe, vorzugsweise wetterfestem Gewebe, und/oder Holz bestehen, vorzugsweise aus Kunststoff oder Metall. Die Ummantelung des Teils der Vorrichtung **I,** in dem Futter aus dem Reservoir **II** in die Ausgabeeinheit **V** kontrolliert abgegeben wird, kann aus Kunststoff oder/und Metall bestehen. Für die Ausgabeeinheit **V** kommen bevorzugt Kunststoff und/oder Metall und/oder wetterfestes Gewebe in Frage. Für die Abgabeeinheit **V** eignen sich bevorzugt Materialien wie Kunststoff und/oder Metall und/oder Holz. Die Ummantelung von Sensoren **VII/Va** kann z.B. aus Kunststoff und/oder Metall bestehen. Metall bzw. Stahl eignet sich beispielsweise auch für Aufhängung bzw. Aufhängevorrichtung. Ein Podest lässt sich z.B. aus Holz oder/und Stahl bzw. Metall errichten.

Die Ausgabeeinheit V kann ein Magnetventil aufweisen, das auf Befehl (Stromfluss an) für eine definierte Zeit geöffnet wird. Es kann sich auch um einen Futterautomaten handeln, der eine definierte Abgabe von Futtermittel aus dem Reservoir **II** an die Ausgabeeinheit **V** ermöglicht, oder um einen elektrisch steuerbaren Schieberverschluß. Für die Steuereinheit, die Empfängereinheit **IVa** und die elektrischen Sensoren **VII/VIIa** muss eine Energiequelle verfügbar sein. In der Regel handelt es sich um einen wiederaufladbaren Akku. Es können auch für alle Bestandteile der Vorrichtung **I** jeweils eigene Energiequellen zur Verfügung stehen und in die jeweiligen Bestandteile integriert sein. In der beispielhaften Darstellung der erfindungsgemäßen Vorrichtung I gemäß Ausführungsbeispiel der Fig. 1 ist jeweils eine Energiequelle (Akku) in die einzelnen Bauteile integriert. Eine Stromversorgung bzw. Akkuladung kann auch über der Vorrichtung **I** zugeordnete, nicht dargestellte Photovoltaikmodule erfolgen.

Die Ausgabeeinheit **V** ist so konstruiert, dass die Dosiereinheit **IV** bzw. die Ausgabestelle für Futtermaterial sich in der Regel am tiefsten Punkt befindet und sich Futtermaterial/Kirrfutter immer direkt über der Ausgabestelle bzw. dem Bereich der AuslassÖffnung **VI** ansammelt. Dies kann z.B. durch eine kegelförmig zulaufende oder kugelartige Form erreicht werden. Ein Beispiel für diese räumliche Anordnung zeigt beispielhaft Fig. 1. Die Ausgabestelle der Vorrichtung **I** in Fig. 1 ist beispielhaft wie folgt aufgebaut: Die runde untere Öffnung **VI** ist durch eine Scheibe **XV,** deren Durchmesser größer als der der Öffnung **VI** ist, lose verschlossen. Im geschlossenen und gefüllten Zustand von Ausgabeeinheit **V** liegt das Futtermaterial/Kirrgut auf der Scheibe. Am Mittelpunkt der Scheibe **XV** ist eine Stange **XI** (Stab) befestigt, die senkrecht nach unten aus der Öffnung **VI** herausragt. Stoßen Wildschweine nun mit ihrem Rüssel an diese Stange **XI,** so kann die Scheibe **XV** die Öffnung **VI** nicht mehr verschließen und das Futter fällt aus der Öffnung heraus. Schwarzwild ist hinreichend intelligent und lernfähig sowie motorisch geschickt genug, um diesen Schließmechanismus zu erkennen und auszulösen.

Neben dem beschriebenen manuellen, d.h. ferngesteuerten Betrieb der Vorrichtung **I** gibt es eine Ausführungsvariante, in der die Futtermaterial/Kirrfutterausgabe automatisiert abläuft, wie z.B. auf folgende Weise: Die tägliche Abgabemenge an Kirrgut aus dem Reservoir **II** an die Ausgabeeinheit **V** bleibt dabei begrenzt (Tageslimit). Eine automatische Auffüllung von Ausgabeeinheit **V** erfolgt nur, wenn durch einen Sensor **VII** (z.B. eine Kamera **VIIa** mit Bilderkennung) eindeutig festgestellt wurde, dass Futter aus der Ausgabeeinheit **V** durch die Zieltierart (beispielsweise Wildschweine) entnommen wurde und wenn gleichzeitig die täglich begrenzte Menge an Futtermaterial/Kirrgut noch nicht erreicht worden ist. In diesem Fall erfolgt eine Kommunikation zwischen Sensor **VII** und Dosiereinheit **IV** (direkt oder über eine zentrale Steuereinheit) und es wird Kirrfutter nachgeliefert, maximal bis zum erlaubten Tageslimit. Falls das Tageslimit bereits erreicht ist, erfolgt eine Futtermittelabgabe aus dem Reservoir **II** an die Ausgabeeinheit **V** erst am Folgetag. Diese automatisierte, bevorzugte Ausführungsvariante ist ebenfalls Gegenstand dieser Erfindung. Die Automatisierung dieses Prozesses bezieht sich auf die Ausführung des Fütterungsprozesses - insbesondere der automatisierten Entscheidung zur erneuten Ausgabe von Kirrfutter, wobei das Futter selektiv der Zieltierart zugutekommt und eine tägliche maximale Futtermenge nicht überschritten wird. Es handelt sich also nicht um einen automatische Dispenser bzw. Futterautomaten in dem Sinne, dass nach einem zeitlich festgelegten Programm an bestimmten Tagen oder auch täglich Futter automatisch und unabhängig von der Anwesenheit der Zieltierart ausgegeben wird.

In einer weiteren bevorzugten Ausführungsvariante handelt es sich um die beschriebene Variante der Vorrichtung **I** mit automatisierter Futtermaterialausgabe, wobei die Bilderkennung mit einem Lernprozess basierend auf einer Kl-Software kombiniert sein kann und so kontinuierlich in der Bildauswertung verbessert wird. Auch diese Ausführungsvariante ist Gegenstand dieser Erfindung.

In einer weitere bevorzugten Ausführungsvariante erfolgt die Futterausgabe an Ausgabestelle ebenfalls automatisiert - und zwar im Sinne von einer automatischen Entscheidung zur Futterfreigabe basierend auf einer Bilderkennung. Im Falle von einer Bilderkennung kann z.B. ein Magnetventil, geöffnet werden, indem z.B. aufgrund einer Bilderkennung ein Steuerbefehl an ein Magnetventil ausgegeben wird (Stromfluss an) und es zum Auswurf des Futtermaterials/Kirrguts, das sich in der Ausgabeeinheit **V** befindet, kommt. Ein Vorteil dieser Ausführungsvariante: Die Bilderkennung ermöglicht die exklusive Futterausgabe an verschiedene Zieltierarten, z.B. exklusive Futterausgabe an z.B. Schwarzwild oder Rotwild oder Rehe. Die Bilderkennung dieser Ausführungsvariante kann auch mit einem Kl-basierten Lernalgorithmus kombiniert werden, sodass die Fehlerquote kontinuierlich reduziert wird. Diese Ausführungsform ist ebenfalls Gegenstand dieser Erfindung.

In einer weiteren Ausführungsvariante handelt es sich um eine erfindungsgemäße Vorrichtung **I,** die eine automatisierte oder wahlweise eine manuelle (Kirr)Futterausgabe oder beides ermöglicht. Auch diese Variante ist Teil dieser Erfindung.

Die in Fig. 1 gezeigte erfindungsgemäße Vorrichtung **I** zeigt alle wesentlichen Merkmale der Erfindung. In einem stark vereinfachten Ausführungsbeispiel der Erfindung (nicht dargestellt) weist die Dosiereinheit **IV** eine verschließbare Öffnung **VI** mit kreisförmigem Loch auf. Dieses Loch befindet sich an der niedrigsten Stelle des Ausgabeeinheit **V.** Verschlossen wird dieses Loch beispielsweise durch eine innen liegende Scheibe **XV,** beispielsweise eine Holzscheibe, deren Durchmesser größer ist als der des Lochs. In der Mitte der Holzscheibe ist eine Stange **XI,** beispielsweise ein Holzstab im 90°-Winkel befestigt, der als Auslöser dient. Dieser Holzstab zeigt senkrecht nach unten aus der Öffnung **VI** heraus. Durch Anstoßen mit ihrem Rüssel können Sauen das Loch kurzzeitig öffnen. Futtermaterial, das sich in der Ausgabeeinheit **V** befindet, fällt heraus und ist nun für Sauen erreichbar. Die Auslösung kann in der Steuereinheit erfasst werden, um ein Signal an den Nutzer auszugeben, um diesem die Möglichkeit zur fernbedienten Ausgabe von weiterem Futtermaterial durch Absenden eines Steuerbefehls zu geben oder die weitere Ausgabe von Futtermaterial abhängig von über in der Steuereinheit hinterlegten zeitintervall- und/oder höchstmengenabhängigen Steuerbefehlen freizugeben und darüber zu steuern oder zu sperren. Es kann somit auch bei selbstständiger Betätigung der Vorrichtung **I** durch ein Tier sichergestellt werden, dass die spezifizierten in einem Zeitintervall auszugebenden Höchstfuttermengen nicht überschritten werden oder Futtermaterial an eine andere als die beabsichtige Zieltierart ausgegeben wird.

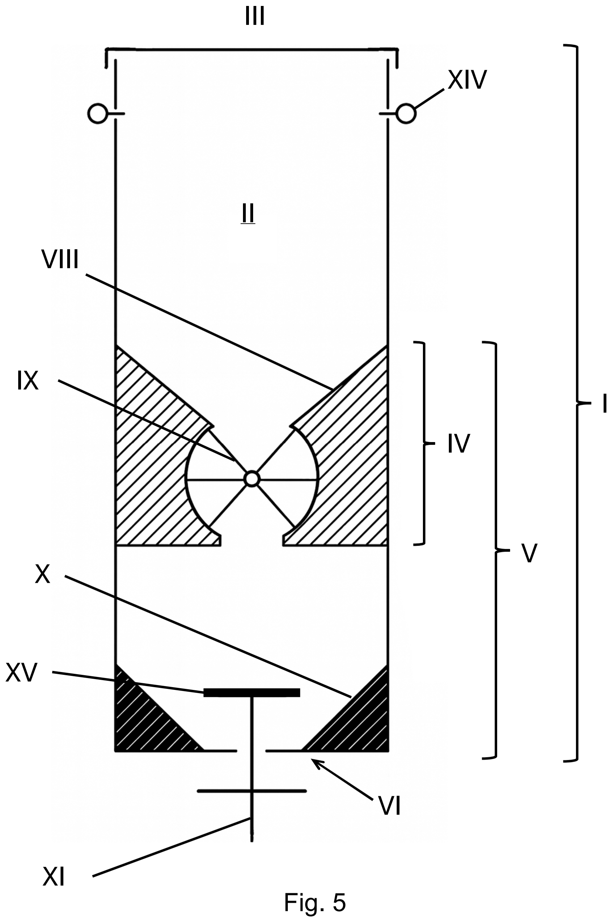

**Fig. 5** zeigt eine schematische Darstellung einer weiteren Ausführungsform der erfindungsgemäßen Vorrichtung **I** zur kontrollierten Abgabe von Futtermaterial. Die Vorrichtung **I** umfasst ein Reservoir **II** zur Aufnahme des Futtermaterials, das im oberen Bereich mit einer durch beispielsweise einen abnehmbaren Deckel **III** verschließbaren Nachfüllöffnung versehen ist. Über die Aufhängung **XIV** kann die Vorrichtung an einem geeigneten Ort, beispielsweise an einem Baum oder einem Gestell, befestigt werden.

Im unteren Bereich des Reservoirs **II** ist eine Dosiereinheit **IV** angeordnet, welche ein Flügelrad **IX** umfasst, das als Dosierelement dient. Das Flügelrad **IX** wird durch einen Antrieb **XIII** in Drehbewegung versetzt, wobei der Antrieb **XIII** über eine in der Vorrichtung vorgesehene Steuereinheit angesteuert wird. Die Steuereinheit regelt die Drehung des Flügelrades **IX** und steuert damit die mengenmäßige Ausgabe von Futtermaterial aus dem Reservoir **II.** Durch die gezielte Drehbewegung des Flügelrades **IX** kann eine definierte Menge an Futtermaterial dosiert und an die darunterliegende Ausgabeeinheit **V** abgegeben werden.

Die Dosierung erfolgt dabei über die einzelnen Flügel des Flügelrades **IX,** deren Volumen die pro Umdrehung oder Teilumdrehung ausgegebene Futtermenge bestimmt. Durch Anpassung der Drehdauer oder der Drehgeschwindigkeit kann die Steuereinheit die abgegebene Gesamtmenge präzise regeln. Innerhalb des Reservoirs **II** sind schräge Flächen **VIII** ausgebildet, die das Nachrutschen des Futtermaterials zum Flügelrad **IX** unterstützen.

Die Ausgabeeinheit **V** ist unterhalb der Dosiereinheit **IV** angeordnet und weist eine trichterförmige Ausbildung mit Ausgabeschrägen **X** auf, die das abgegebene Futtermaterial zur Auslassöffnung **VI** führen. Die Öffnung **VI** ist durch eine lose aufliegende Scheibe **XV** verschlossen, die über eine senkrecht nach unten verlaufende Stange **XI** betätigt werden kann. Durch Anstoßen der Stange **XI,** beispielsweise durch Schwarzwild, wird die Scheibe **XV** angehoben oder seitlich verschoben und die Auslassöffnung **VI** freigegeben, sodass das Futtermaterial aus der Ausgabeeinheit V entnommen werden kann.

Nach Abschluss der Futterausgabe wird die Ausgabeeinheit - sofern zeit- oder mengenmäßig zulässig - wieder befüllt und das Flügelrad **IX** danach in eine Ausgangsposition zurückgeführt und der Antrieb **XIII** deaktiviert. Die Vorrichtung **I** kehrt anschließend in einen Überwachungszustand zurück, in dem die Sensoren **VII, VIIa** weiterhin aktiv sind und auf neue Signale reagieren.

Durch diese Kombination aus sensorgesteuerter Erkennung, gezielter Ansteuerung des Flügelrad **IX** und elektronischer Steuerlogik wird eine präzise, artselektive und energieeffiziente Abgabe von Futtermaterial erreicht. Das Verfahren ermöglicht es, die Futtermenge pro Tag oder pro Tierkontakt zu begrenzen und dabei eine unkontrollierte oder übermäßige Futterausgabe an Nicht-Zieltierarten zuverlässig zu verhindern.

Die dargestellte Vorrichtung erlaubt somit eine kontrollierte, bedarfsgerechte und insbesondere auf eine Zieltierart abgestimmte Abgabe von Futtermaterial, wobei über die Steuereinheit und das darüber ansteuerbare Flügelrad **IX** eine präzise Dosierung der abgegebenen Menge ermöglicht wird.

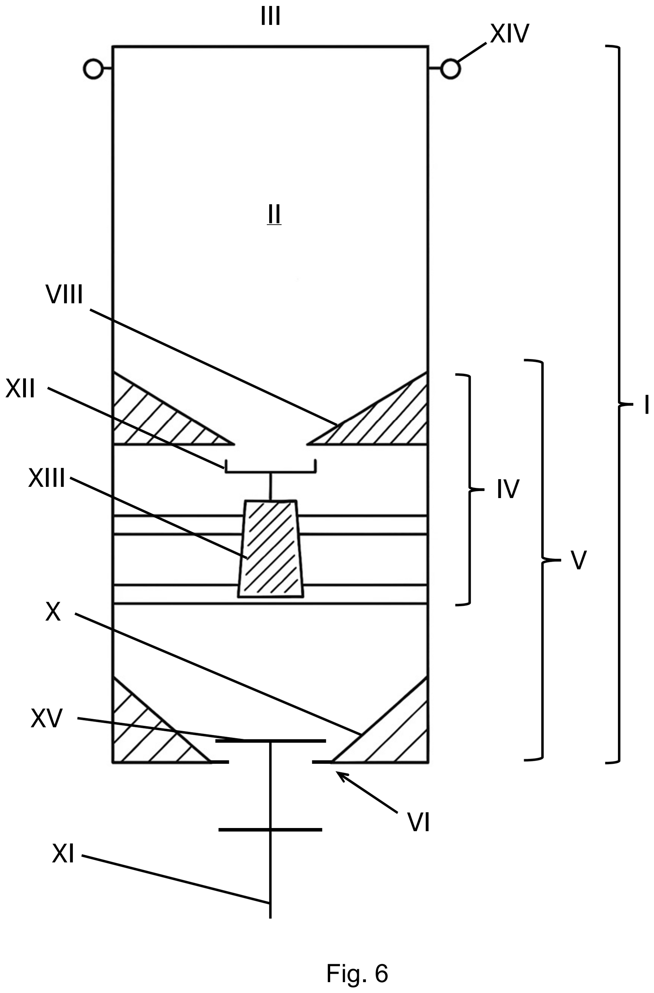

**Fig. 6** zeigt eine schematische Darstellung einer weiteren Ausführungsform der erfindungsgemäßen Vorrichtung I zur kontrollierten Abgabe von Futtermaterial. Die Vorrichtung **I** dient insbesondere zur artselektiven und fernsteuerbaren bzw. automatisierbaren Abgabe von Kirrgut, beispielsweise für Schwarzwild, und ist Teil eines Systems, das eine automatisierte oder nutzergesteuerte Futterfreigabe ermöglicht. Die Vorrichtung **I** weist ein Gehäuse auf, das wenigstens ein Reservoir **II** zur Aufnahme eines Futtermaterials umfasst. Das Reservoir **II** ist im oberen Bereich mit einer Nachfüllöffnung **III** versehen, über die das Futtermaterial bequem nachgefüllt werden kann. Im unteren Bereich des Reservoirs **II** sind Reservoirschrägen **VIII** vorgesehen, welche das eingefüllte Futtermaterial in Richtung einer darunter angeordneten Dosiereinheit **IV** leiten.

Die Dosiereinheit **IV** bildet den Übergang zwischen dem Reservoir **II** und der darunter angeordneten Ausgabeeinheit **V.** In der Dosiereinheit **IV** ist ein Drehteller **XII** angeordnet, der über einen Antrieb **XIII** drehbar gelagert und steuerbar ist. Der Drehteller **XII** dient als zentrales Dosierorgan, über das eine definierte Menge an Futtermaterial aus dem Reservoir **II** in die Ausgabeeinheit **V** überführt wird. Je nach Ansteuerung kann der Drehteller **XII** kontinuierlich oder schrittweise gedreht werden, wodurch die abgegebene Futtermenge präzise reguliert wird.

Der Antrieb **XIII** kann elektrisch, vorzugsweise akkubetrieben, ausgeführt und über eine Steuereinheit angesteuert sein, die mit Sensoren **VII** und/oder einer Kamera **VIIa** kommuniziert. Die Sensoren **VII** erfassen dabei beispielsweise Bewegung, Tiererkennung oder Füllstand, während über die Kamera **VIIa** zusätzlich oder alternativ eine optische Erfassung des Fütterungsbereichs durchgeführt werden kann, um beispielsweise über eine Kl-Auswertung zu bestimmen, ob eine freigabeberechtigte Tierart anwesend ist.

Unterhalb der Dosiereinheit **IV** befindet sich die Ausgabeeinheit **V,** die eine Auslassöffnung **VI** aufweist. Über diese Auslassöffnung **VI** wird das vom Drehteller **XII** dosierte Futtermaterial abgegeben. Die Auslassöffnung **VI** kann durch eine Scheibe **XV** oder ein anderes Verschlusselement gegen unbefugte Entnahme geschützt sein. Alternativ oder zusätzlich kann im Bereich der Ausgabeeinheit **V** eine Stange **XI** vorgesehen sein, welche durch die Bewegung eines Tieres betätigt werden kann, um eine Futterfreigabe anzustoßen oder zu unterstützen.

Die Ausgabeeinheit **V** kann ferner mit einer Ausgabeschräge **X** versehen sein, über welche das dosierte Futtermaterial in eine geeignete Position geleitet wird, um von der Zielart aufgenommen zu werden.

Die Vorrichtung **I** kann über Aufhängungen **XIV** an einem Baum, einem Gestell oder einer anderen geeigneten Halterung befestigt werden. Innerhalb des Systems kann die Vorrichtung **I** mit einer Empfängereinheit **IVa** kommunizieren, die Teil einer übergeordneten Steuerung oder Kommunikationsverbindung ist, beispielsweise über Mobilfunk, WLAN oder Satellit.

Die dargestellte Ausführungsform ermöglicht somit eine gezielte, artselektive und fernsteuerbare Futterabgabe, bei der die Menge des ausgegebenen Futtermaterials über den steuerbaren Drehteller **XII** präzise dosiert werden kann.

Das in Fig. 6 dargestellte Ausführungsbeispiel einer Vorrichtung **I** zur Abgabe von Futtermaterial kann insbesondere zur Durchführung eines automatisierten oder ferngesteuerten Verfahrens zur dosierten und artselektiven Futterausgabe vorgesehen werden.

Das Verfahren sieht vor, dass zunächst das Reservoir **II** über die Nachfüllöffnung **III** mit Futtermaterial befüllt wird. Die Reservoirschrägen **VIII** führen das Futtermaterial selbsttätig in Richtung der Dosiereinheit **IV.** In dieser Dosiereinheit **IV** befindet sich der steuerbare Drehteller **XII,** der über den Antrieb **XIII** betätigt wird.

Das Verfahren wird durch ein Sensorsignal oder ein Nutzersignal eingeleitet. Dabei kann ein Sensor **VII,** beispielsweise ein Bewegungs- oder Näherungssensor, oder eine Kamera **VIIa** ein Tier im Bereich der Vorrichtung **I** erkennen. Die Sensordaten werden an eine Auswerte- oder Steuereinheit übermittelt, die entscheidet, ob und in welchem Umfang eine Futterfreigabe erfolgen soll.

Liegt ein gültiges Freigabesignal vor, etwa durch die Erkennung einer freigabeberechtigten Tierart (z. B. Schwarzwild) oder durch eine Fernfreigabe des Nutzers über eine Kommunikationsverbindung, wird der Antrieb **XIII** aktiviert. Dieser setzt den Drehteller **XII** in Drehbewegung, wodurch eine bestimmte Menge des Futtermaterials aus der Dosiereinheit **IV** in Richtung der Ausgabeeinheit **V** transportiert wird.

Die Drehbewegung des Drehtellers **XII** kann dabei in Abhängigkeit von Parametern wie Tageszeit, bereits abgegebener Futtermengen, erkannter Tierart oder Füllstand des Reservoirs **II** gesteuert werden. Die Steuerung kann zeitgesteuert, ereignisgesteuert oder adaptiv erfolgen. Über eine entsprechende Software oder App kann der Nutzer vorgeben, welche Futtermenge, zu welchen Zeiten oder bei welchen Bedingungen ausgegeben werden darf.

Das vom Drehteller **XII** dosierte Futtermaterial gelangt über die Ausgabeschräge **X** in die Ausgabeeinheit **V** und wird über die Auslassöffnung **VI** abgegeben. Die Auslassöffnung **VI** kann durch die Scheibe **XV** oder eine vergleichbare mechanische Sperre geschlossen sein, die nur bei aktiver Aktivierung durch die Zieltierart geöffnet oder teilweise freigegeben wird. Optional kann die Futterabgabe zusätzlich durch eine manuelle Betätigung, etwa über eine Stange **XI,** unterstützt werden.

Nach Abschluss der Futterausgabe wird die Ausgabeeinheit - sofern zeit- oder mengenmäßig zulässig - wieder befüllt und der Drehteller **XII** danach in seine Ausgangsposition zurückgeführt und der Antrieb **XIII** deaktiviert. Die Vorrichtung I kehrt anschließend in einen Überwachungszustand zurück, in dem die Sensoren **VII, VIIa** weiterhin aktiv sind und auf neue Signale reagieren.

Durch diese Kombination aus sensorgesteuerter Erkennung, gezielter Ansteuerung des Drehtellers **XII** und elektronischer Steuerlogik wird eine präzise, artselektive und energieeffiziente Abgabe von Futtermaterial erreicht. Das Verfahren ermöglicht es, die Futtermenge pro Tag oder pro Tierkontakt zu begrenzen und dabei eine unkontrollierte oder übermäßige Futterausgabe an Nicht-Zieltierarten zuverlässig zu verhindern.

### Bezugszeichenliste

- I: Vorrichtung
- II: Reservoir
- III: Nachfüllöffnung
- IV: Dosiereinheit
- IVa: Empfängereinheit
- V: Ausgabeeinheit
- VI: Auslassöffnung / Öffnung
- VII: Sensor
- VIIa: Kamera / optischer Sensor
- VIII: Reservoirschräge
- IX: Flügelrad
- X: Ausgabeschräge
- XI: Stange
- XII: Drehteller
- XIII: Antrieb
- XIV: Aufhängung
- XV: Scheibe

## Patentansprüche

1. Vorrichtung (I) zur automatischen und/oder fernbedient durch einen Nutzer steuerbaren Abgabe von Futtermaterial, insbesondere Wildfutter oder Kirrgut, umfassend:
- wenigstens ein Reservoir (II) für das Futtermaterial und
- eine dem Reservoir (II) zugeordnete Ausgabeeinheit (V) für das Futtermaterial;
- wenigstens einen mit der Vorrichtung (I) und/oder der Ausgabeeinheit (V) verbundenen oder in räumlicher Nähe zu der Vorrichtung (I) und/oder der Ausgabeeinheit (V) jedoch von dieser/diesen losgelöst angeordneten Sensor (VII);
- eine Sendeeinheit für die Absendung wenigstens eines von dem Sensor (VII) erfassten Sensorsignals an den Nutzer und/oder eine Auswerteeinheit;
- eine Empfängereinheit für den Empfang wenigstens eines von dem Nutzer und/oder der Auswerteeinheit aus dem empfangenen Sensorsignal abgeleiteten Steuerbefehls, und
- eine mit der Empfängereinheit gekoppelte Steuereinheit, die dazu ausgebildet ist, nach Empfang des Steuerbefehls eine Ausgabe von Futtermaterial aus dem Reservoir (II) in die Ausgabeeinheit (V) zu steuern.

2. Vorrichtung (I) nach einem der vorhergehenden Ansprüche, **dadurch gekennzeichnet, dass** die Ausgabeeinheit (V) einen Verschluss aufweist, der über eine auf eine aktive Betätigung durch das zu fütternde Tier abgestimmte Öffnung (VI) für eine Futterentnahme aus der Ausgabeeinheit durch das zu fütternde Tier verfügt.

3. Vorrichtung (I) nach Anspruch 1, **dadurch gekennzeichnet, dass** eine mit dem Reservoir (II) wirkverbundene Dosiereinheit (IV) zur kontrollierten Futterabgabe in die Ausgabeeinheit (V) vorgesehen ist, wobei die Steuereinheit dazu ausgebildet ist, die Dosiereinheit (IV) zu steuern und wobei eine Ausgabe von Futtermaterial in die Ausgabeeinheit (V) über die Dosiereinheit (IV) erfolgt.

4. Vorrichtung nach einem der vorhergehenden Ansprüche, **dadurch gekennzeichnet, dass** das Reservoir (II), die Ausgabeeinheit (V) und optional die Dosiereinheit (IV) räumlich getrennt voneinander angeordnet und insbesondere über ein Schlauch- oder Leitungssystem verbunden sind.

5. Vorrichtung (I) nach einem der vorhergehenden Ansprüche, **dadurch gekennzeichnet, dass** der wenigstens eine Sensor (VII) als optischer Sensor, bevorzugt Kamera (Vlla), Füllstands-, Bewegungs- oder Berührungssensor ausgebildet ist und/oder bevorzugt mehrere, insbesondere verschieden ausgebildete Sensoren (VII) vorgesehen sind und die von den Sensoren (VII) erfassten Sensorsignale über die Sendeeinheit jeweils einzeln oder kombiniert an den Nutzer und/oder die Auswerteeinheit absendbar sind und wobei die jeweiligen Sensoren (VII) insbesondere unmittelbar am oder im Reservoir (II), an oder in der Ausgabeeinheit (V) und/oder an oder in der Dosiereinheit (IV) vorgesehen und/oder in räumlicher Nähe zu diesen angeordnet sind.

6. Vorrichtung (I) nach einem der vorhergehenden Ansprüche, **dadurch gekennzeichnet, dass** die Steuereinheit nach Empfang des Steuerbefehls die Ausgabe von Futtermaterial aus der und/oder in die Ausgabeeinheit (V) selbständig zeitintervall- und/oder höchstmengenabhängig steuert.

7. Vorrichtung (I) nach einem der vorhergehenden Ansprüche, **dadurch gekennzeichnet, dass** die Sendeeinheit und die Empfängereinheit (IVa) bevorzugt über ein lokales Netzwerk, ein Mobilfunknetzwerk, ein Satellitennetzwerk oder ein drahtloses Netzwerk und/oder mit dem Nutzer verbunden sind und die Steuerbefehle des Nutzers über das Mobilfunknetzwerk, das Satellitennetzwerk oder das drahtlose Netzwerk an die Empfängereinheit ausgebbar sind.

8. Vorrichtung (I) nach einem der vorhergehenden Ansprüche, **dadurch gekennzeichnet, dass** eine Sperrung der Ausgabe von Futtermaterial nach einer definierten Anzahl von, insbesondere täglichen, Zeitintervallen oder bei Erreichen einer definierten, insbesondere täglich, ausgegebenen Höchstfuttermenge und/oder Unterschreiten einer Mindestfüllmenge des Reservoirs (II) vorgesehen ist.

9. Vorrichtung (I) nach einem der vorhergehenden Ansprüche, **gekennzeichnet durch** eine autonome, insbesondere wiederaufladbare Energiequelle zur Energieversorgung der Ausgabeeinheit (V), der Dosiereinheit (IV), des wenigstens einen Sensors (VII), der Empfängereinheit, der Auswerteeinheit und/oder der Steuereinheit.

10. Vorrichtung (I) nach einem der vorhergehenden Ansprüche, **gekennzeichnet durch** eine Auswerteeinheit zur Auswertung der empfangenen Sensorsignale und Ableitung von Steuerbefehlen und/oder der vom Nutzer empfangenen Steuerbefehle.

11. Vorrichtung (I) nach einem der vorhergehenden Ansprüche, **gekennzeichnet durch** zur Betätigung der Dosiereinheit (IV) und/oder der Ausgabeeinheit (V) mechanisch oder elektrisch betätigte Aktuatoren vorgesehen sind, wobei die Aktuatoren bevorzugt durch einen von der Steuereinheit ausgebbaren Steuerbefehl betätigbar sind.

12. Vorrichtung (I) nach einem der vorhergehenden Ansprüche, **dadurch gekennzeichnet, dass** die Vorrichtung (I) zwei oder mehr Reservoirs (II) für Futtermaterialen für zwei oder mehr unterschiedliche erkennbaren Tierarten aufweist und eine Ausgabe von Futtermaterial aus einem oder mehreren Reservoir(s) (II) in Abhängigkeit von der oder den jeweils erkannten Tierart(en) vorgesehen ist.

13. Vorrichtung (I) nach einem der vorhergehenden Ansprüche, **dadurch gekennzeichnet, dass** in der Dosiereinheit (IV) ein insbesondere elektrisch angetriebenes Dosierelement, insbesondere ein Drehteller (XII) oder ein Flügelrad (IX) vorgesehen ist und eine Betätigung des Dosierelementes in Abhängigkeit von dem aus den empfangenen Sensorsignalen ableitbaren Steuerbefehlen und/oder der vom Nutzer empfangenen Steuerbefehle erfolgt.

14. Vorrichtung (I) nach Anspruch 13, **dadurch gekennzeichnet, dass** das Dosierelement zur Ausgabe einer definierten Menge von Futtermaterial eingerichtet ist.

15. Verfahren zur fernbedienten und/oder automatischen Ausgabe von Futtermaterial aus einer Vorrichtung (I) gemäß einem der Ansprüche 1 bis 14, umfassend die Schritte
- Erfassen eines Sensorsignal durch den wenigstens einen Sensor (VII);
- Senden des Sensorsignals an einen Nutzer und/oder eine Auswerteeinheit;
- Auswerten des Sensorsignals durch den Nutzer und/oder die Auswerteeinheit;
- Definieren wenigstens eines Steuerbefehls auf Basis des empfangenen Sensorsignals durch den Nutzer und/oder durch die Auswerteeinheit;
- Absenden des Steuerbefehls an die Empfängereinheit;
- Ausgeben von Futtermaterial in die Ausgabeeinheit (V) auf Basis des wenigstens einen empfangenen Steuerbefehls; und
- Entnahme des Futtermaterials aus der Ausgabeeinheit durch ein zu fütterndes Tier.
